# EUROPEAN PATENT APPLICATION

(11) **EP 4 726 922 A1**
(43) Date of publication of application: **15.04.2026**
(21) Application number: 24843473.0
(22) Date of filing: 16.07.2024
(51) Int. Cl.: H01Q 5/307, H01Q 1/38, H01Q 1/24, H01Q 9/04, H05K 1/02, H04M 1/02

(54) **ELECTRONIC DEVICE COMPRISING ANTENNA**

(30) Priority: 19.07.2023 KR 20230093744; 17.10.2023 KR 20230138283
(71) Applicant: Samsung Electronics Co., Ltd., Suwon-si, Gyeonggi-do 16677 (KR)
(72) Inventor: LEE, Seyeon, Suwon-si, Gyeonggi-do 16677 (KR); KIM, Haeyeon, Suwon-si, Gyeonggi-do 16677 (KR); KIM, Jinkyung, Suwon-si, Gyeonggi-do 16677 (KR); LIM, Jongoh, Suwon-si, Gyeonggi-do 16677 (KR); JUNG, Kyueun, Suwon-si, Gyeonggi-do 16677 (KR)
(74) Representative: Nederlandsch Octrooibureau
(86) International application number: PCT/KR2024/010159
(87) International publication number: WO 2025/018757

(57) **Abstract**

According to various embodiments, an electronic device may comprise: a housing; a dielectric structure which is disposed in an inner space of the housing, and includes a first surface and a second surface opposite to the first surface; a first antenna structure which is disposed in the dielectric structure; a second antenna structure which is arranged at the first surface to be spaced apart from at least a part of the first antenna structure, and includes a conductive layer; and at least one wireless communication circuit which is configured to transmit or receive a signal in at least one frequency band through the first antenna structure and/or the second antenna structure, wherein the first antenna structure comprises: a first conductive pattern which is arranged at the first surface to be spaced apart from the second antenna structure; and a second conductive pattern which is electrically connected to the first conductive pattern, and is arranged at the second surface to at least partially overlap the conductive layer when the first surface is seen from above.

## Description

### [Technical Field]

Embodiments of the disclosure relate to an electronic device including an antenna.

### [Background Art]

An electronic device may communicate with external electronic devices by using various wireless communication technologies. For example, the wireless communication technologies may include at least one of ultra-wideband (UWB) communication, wireless fidelity (Wi-Fi) communication, long term evolution (LTE) communication, 5G communication (or new radio (NR) communication), or Bluetooth communication. To support such wireless communication technologies, multiple antenna structures (e.g., antennas or antenna modules) may be arranged in the electronic device. For example, an improved arrangement design for slimming of the electronic device may be considered for the multiple antenna structures.

The above-described information may be provided as related art for the purpose of helping to understand the disclosure. No claim or determination is made as to whether any of the foregoing may be applied as prior art with respect to the disclosure.

### [Disclosure of Invention]

### [Technical Problem]

An electronic device may include at least one antenna (e.g., an antenna structure or an antenna module). The at least one antenna may include a legacy antenna operating in a frequency band of about 600 MHz to 6,000 MHz, a 5G antenna operating in a frequency band of about 3 GHz to 300 GHz, or an antenna configured to determine the location of a nearby external electronic device. For example, the antenna configured to measure the position of an external electronic device located at a short distance may include an ultra-wideband (UWB) antenna including at least two antenna elements operating in a frequency band of about 6 GHz to 8.5 GHz.

An electronic device may include multiple antenna structures operating in various frequency bands described above. Such antenna structures may utilize a conductive portion (e.g., a conductive side surface bezel, a metal bezel, or a side surface frame) disposed on a portion of the side surface of the electronic device, may be arranged in a patterned form within an internal space of the electronic device, or may be implemented as a single antenna module through a separate substrate.

However, as the number of antenna structures increases to cover various frequency bands, it may be difficult to secure a sufficient mutual isolation distance or a sufficient distance from surrounding conductors within the internal space of the electronic device that is becoming increasingly slimmer. Furthermore, while antenna structures require a larger area for lower frequency bands, there may be design difficulties in arranging the antenna structures within the internal space of the electronic device that is becoming increasingly slimmer.

### [Solution to Problem]

Various embodiments of the disclosure may provide an electronic device including an antenna having an arrangement structure that may help slim down the electronic device.

Various embodiments may provide an electronic device including an antenna that may help improve performance between antennas while minimizing an increase in the volume of the electronic device.

However, the problems to be solved by the disclosure are not limited to those mentioned above, and may be variously extended without departing from the spirit and scope of the disclosure.

According to various embodiments, an electronic device may include a housing, a dielectric structure disposed in an internal space of the housing and including a first surface and a second surface facing away from the first surface, a first antenna structure disposed on the dielectric structure, a second antenna structure disposed on the first surface and spaced apart from at least a portion of the first antenna structure and including a conductive layer, and at least one wireless communication circuit configured to transmit or receive a signal in at least one frequency band through the first antenna structure and/or the second antenna structure. The first antenna structure may include a first conductive pattern disposed on the first surface and spaced apart from the second antenna structure, a second conductive pattern electrically connected to the first conductive pattern and disposed on the second surface such that, when viewed from above the first surface, at least a portion of the second conductive pattern overlaps the conductive layer, and a through-hole disposed to penetrate from the first surface to the second surface and electrically connecting the first conductive pattern and the second conductive pattern.

According to various embodiments, an electronic device may include a first housing, a second housing foldably coupled to the first housing through a hinge device, a dielectric structure disposed in an internal space of the first housing and including a first surface and a second surface facing away from the first surface, a first antenna structure disposed on the dielectric structure, a second antenna structure disposed on the first surface and spaced apart from at least a portion of the first antenna structure and including a conductive layer, a third antenna structure including a conductive portion disposed on a portion of a side surface of the first housing, and at least one wireless communication circuit configured to transmit or receive a signal in at least one frequency band through the first antenna structure, the second antenna structure, and/or the third antenna structure. The first antenna structure may include a first conductive pattern disposed on the first surface and spaced apart from the second antenna structure, and a second conductive pattern electrically connected to the first conductive pattern and disposed on the second surface such that, when viewed from above the first surface, at least a portion of the second conductive pattern overlaps the conductive layer.

### [Advantageous Effects of Invention]

According to exemplary embodiments of the present disclosure, an electronic device includes a first conductive pattern disposed on an upper surface of a dielectric structure, and a second conductive pattern electrically connected to the first conductive pattern and disposed on a rear surface of the dielectric structure. The second conductive pattern is arranged to form a field by at least partially overlapping a conductive layer (e.g., a ground layer) of another antenna structure disposed on the upper surface. This arrangement allows the antenna to operate in a relatively low frequency band compared to its area, which may reduce degradation of radiation performance due to mutual interference with surrounding antenna structures and/or conductors, and may help achieve a slimmer electronic device.

In addition, various other effects that are directly or indirectly understood through this document may be provided.

The effects that are capable of being obtained by the disclosure are not limited to those described above, and other effects not described above may be clearly understood by a person ordinarily skilled in the art to which the disclosure belongs based on the following description.

### [Brief Description of Drawings]

In connection with the description of the drawings, the same or similar components may be denoted by the same or similar reference numerals.
FIG. 1 is a block diagram of an electronic device according to various embodiments of the disclosure in a network environment.
FIG. 2A is a view illustrating front and side surfaces of an electronic device in an unfolded state according to various embodiments of the disclosure.
FIG. 2B is a view illustrating the rear surface of the electronic device according to various embodiments of the disclosure in the unfolded state.
FIG. 3A is a view illustrating the electronic device in a folded state according to various embodiments of the disclosure, viewed from various directions.
FIG. 3B is a view illustrating one side of the electronic device in the folded state according to various embodiments of the disclosure.
FIG. 4A is an exploded perspective view of the electronic device according to various embodiments of the disclosure.
FIG. 4B is a view illustrating the configuration of the electronic device according to various embodiments of the disclosure.
FIG. 5A is a view illustrating the configuration of a dielectric structure including a first antenna structure according to various embodiments of the disclosure.
FIG. 5B is a view illustrating the configuration of a second antenna structure according to various embodiments of the disclosure.
FIG. 5C is a view illustrating a state in which the second antenna structure is disposed on the dielectric structure according to various embodiments of the disclosure.
FIG. 6A is a rear view of an electronic device according to various embodiments of the disclosure, illustrating the configuration thereof.
FIG. 6B is a view illustrating a state in which a dielectric structure and a second antenna structure according to various embodiments of the disclosure are arranged.
FIG. 7A is a partial cross-sectional view of the electronic device taken along line 7a-7a of FIG. 6B, according to various embodiments of the disclosure.
FIG. 7B is a partial cross-sectional view of the electronic device taken along line 7b-7b of FIG. 6B, according to various embodiments of the disclosure.
FIG. 8 is a view illustrating an arrangement relationship between a first antenna structure and a second antenna structure according to various embodiments of the disclosure.
FIG. 9 is a graph comparing radiation performance of the first antenna structure according to an overlap amount of a second conductive pattern in FIG. 8 according to various embodiments of the disclosure.
FIG. 10A is a view illustrating an arrangement relationship between a first antenna structure and a second antenna structure according to various embodiments of the disclosure.
FIG. 10B is a partial cross-sectional view of an electronic device taken along line 10a-10a of FIG. 10A according to various embodiments of the disclosure.
FIG. 11A is a front perspective view of an electronic device according to various embodiments of the disclosure.
FIG. 11B is a rear perspective view of the electronic device according to various embodiments of the disclosure.
FIG. 12A is a front perspective view of an electronic device according to various embodiments of the disclosure.
FIG. 12B is a rear perspective view of the electronic device according to various embodiments of the disclosure.

### [Mode for the Invention]

Hereinafter, with reference to the drawings, various example embodiments of the disclosure will be described in greater detail so that those skilled in the art can readily carry out the embodiments. However, the disclosure may be implemented in various different forms and is not limited to the example embodiments described herein. In connection with the description of the drawings, the same or similar reference symbols may be used for identical or similar components. Additionally, in the drawings and related descriptions, descriptions of well-known functions and configurations may be omitted for clarity and brevity.

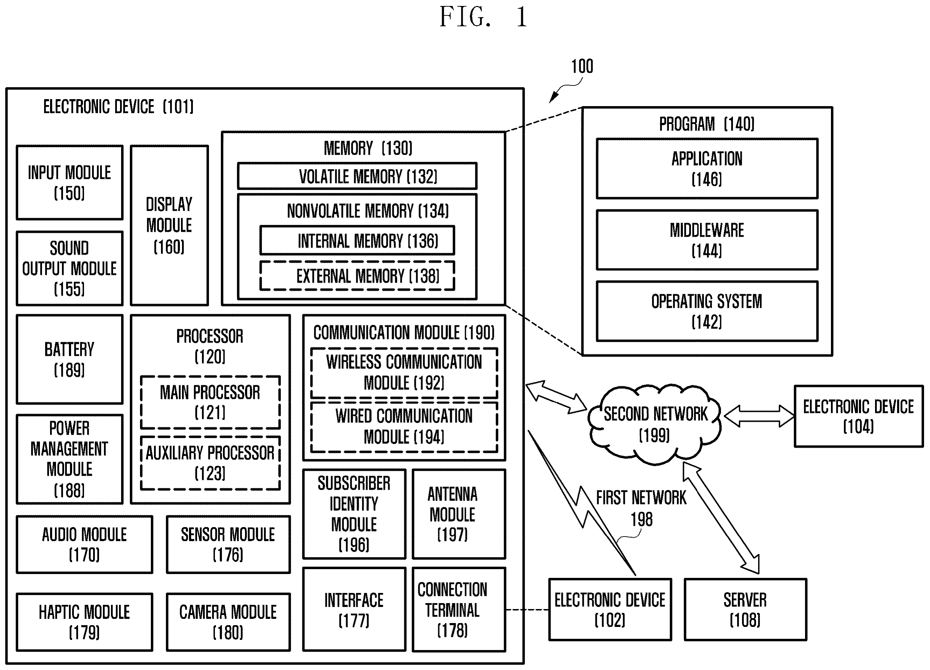

FIG. 1 is a block diagram illustrating an example electronic device in a network environment according to an embodiment of the disclosure.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). The electronic device 101 may communicate with the electronic device 104 via the server 108. The electronic device 101 includes a processor 120, memory 130, an input module 150, an audio output module 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In various embodiments, at least one (e.g., the display device 160 or the camera module 180) of the components may be omitted from the electronic device 101, or one or more other components may be added in the electronic device 101. In various embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. The processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. the non-volatile memory 134 may include internal memory 136 and external memory 138.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, or a digital pen (e.g., a stylus pen).

The audio output module 155 may output sound signals to the outside of the electronic device 101. The audio output module 155 may include, for example, a speaker or a receiver. The speaker may be used for general purposes, such as playing multimedia or playing record, and the receiver may be used for incoming calls. The receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. The display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the audio output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. The interface 177 may include, for example, a high definition multimedia interface (HDMI), a universal serial bus (USB) interface, a secure digital (SD) card interface, or an audio interface.

A connection terminal 178 may include a connector via which the electronic device 101 may be physically connected with the external electronic device (e.g., the electronic device 102). The connection terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture an image or moving images. The camera module 180 may include one or more lenses, image sensors, image signal processors, or flashes.

The power management module 188 may manage power supplied to the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

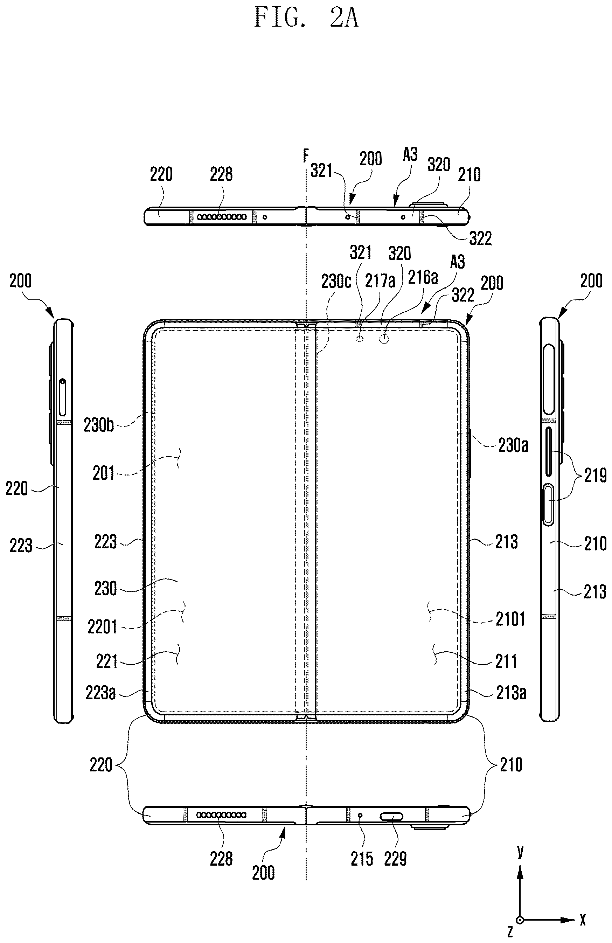

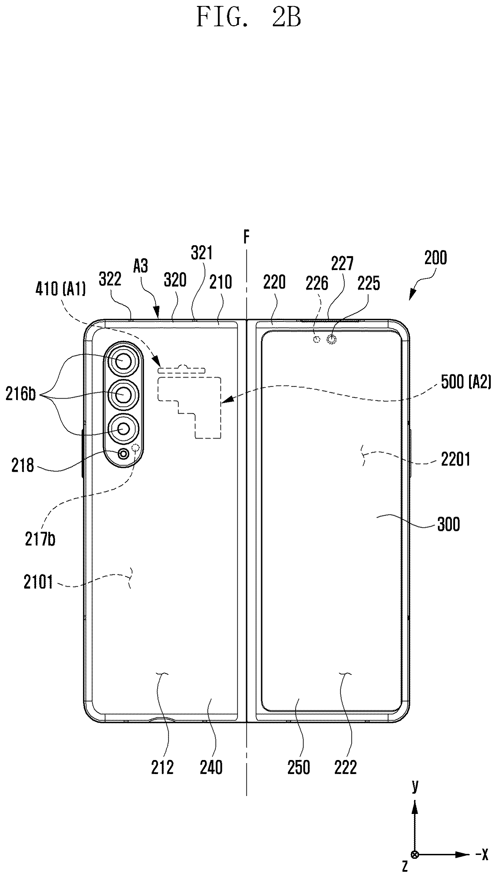

FIG. 2A is a view illustrating front and side surfaces of an electronic device in an unfolded state according to various embodiments of the disclosure. FIG. 2B is a view illustrating a rear surface of the electronic device according to various embodiments of the disclosure in the unfolded state.

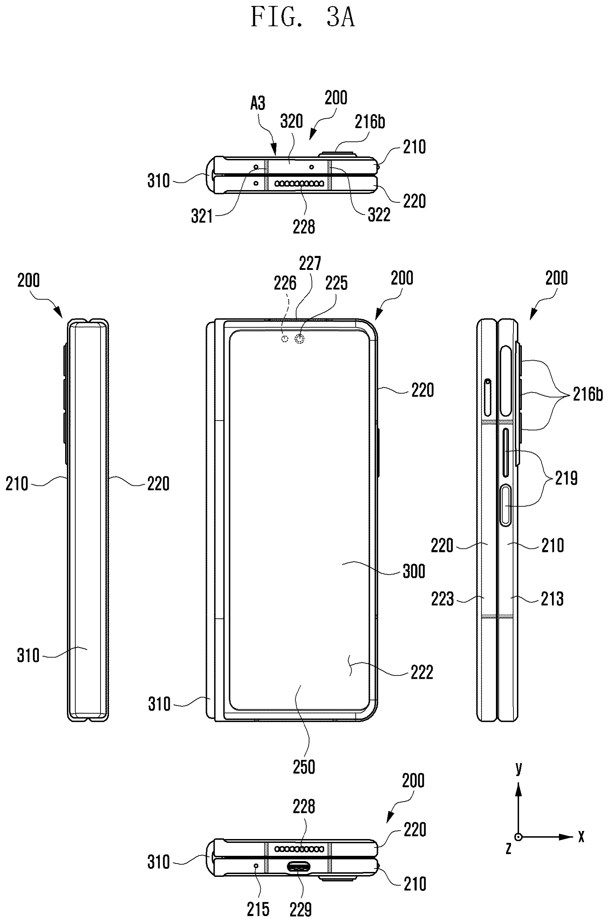

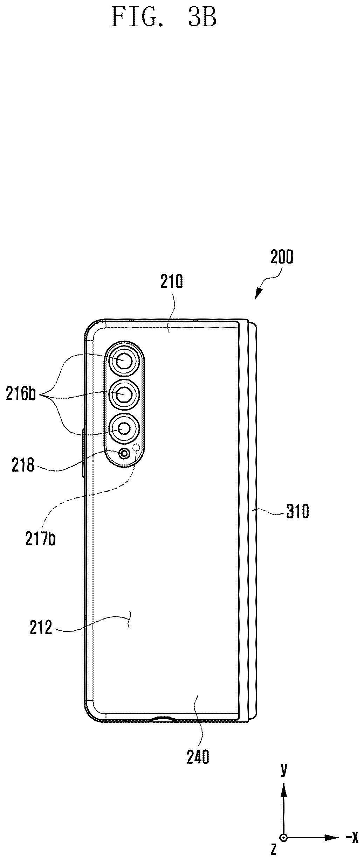

FIG. 3A is a view illustrating the electronic device in a folded state according to various embodiments of the disclosure, viewed from various directions. FIG. 3B is a view illustrating one side of the electronic device in the folded state according to various embodiments of the disclosure.

Referring to FIGS. 2A to 3B, an electronic device 200 may include a first housing 210 (e.g., a first housing portion or a first housing structure) and a second housing 220 (e.g., a second housing portion or a second housing structure) which are coupled to each other to be rotatable about a folding axis F via at least one hinge module (not illustrated) (e.g., a hinge device or a hinge structure). In an embodiment, the first housing 210 and the second housing 220 may be configured as a housing (e.g., a foldable housing) of the electronic device 200. In an embodiment, the electronic device 200 may include a first display 230 (e.g., a flexible display, a foldable display, or a main display) disposed to be supported by being accommodated in the first housing and the second housing. In an embodiment, the electronic device 200 may include a second display 300 (e.g., a sub-display) disposed through the second housing 220. In an embodiment, the electronic device 200 may include a hinge housing 310 (e.g., a hinge cover) which is disposed to be at least partially invisible from the outside through the first housing 210 and the second housing 220 in the unfolded state, and covers the at least one hinge module to be invisible from the outside in the folded state or while being folded. Herein, the surface on which the first display 230 is disposed may be defined as the front surface of the electronic device 200, and the surface opposite to the front surface may be defined as the rear surface of the electronic device 200. In addition, the surface surrounding the space between the front surface and the rear surface may be defined as the side surface of the electronic device 200.

According to various embodiments, the first housing 210 and the second housing 220 may be disposed on opposite sides of the folding axis F, may have shapes that are generally symmetrical to each other with respect to the folding axis F, and may be folded to match each other. According to some embodiments, the first housing 210 and the second housing 220 may be folded asymmetrically with respect to the folding axis F. According to an embodiment, the first housing 210 and the second housing 220 may form an angle or have a distance therebetween, which may be variable depending on whether the electronic device 200 is in the unfolded state, in the folded state, or in the intermediate state.

According to various embodiments, in the unfolded state, the first housing 210, which is connected to the at least one hinge module, may include a first surface 211 disposed to face the front of the electronic device 200, a second surface 212 facing away from the first surface 211, and/or a first side surface member 213 surrounding at least a portion of a first space 2101 between the first surface 211 and the second surface 212. In an embodiment, in the unfolded state, the second housing 220, which is connected to the at least one hinge module, may include a third surface 221 disposed to face the front of the electronic device 200, a fourth surface 222 facing away from the third surface 221, and/or a second side surface member 223 surrounding at least a portion of a second space 2201 between the third surface 221 and the fourth surface 222. In an embodiment, the first surface 211 may be oriented in substantially the same direction as the third surface 221 in the unfolded state and may at least partially face the third surface 221 in the folded state. In an embodiment, the electronic device 200 may include a recess 201 provided to accommodate the first display 230 through structural coupling of the first housing 210 and the second housing 220. In an embodiment, the recess 201 may have substantially the same size as the first display 230. In an embodiment, the first housing 210 may include a first protection frame 213a (e.g., a first decoration member) which is coupled to the first side surface member 213 and disposed to overlap the edges of the first display 230 when the first display 230 is viewed from above, thereby covering the edges of the first display 230 to be invisible from the outside. In an embodiment, the first protection frame 213a may be integrated with the first side surface member 213. In an embodiment, the second housing 220 may include a second protection frame 223a (e.g., a second decoration member) which is coupled to the second side surface member 223 and disposed to overlap the edges of the first display 230 when the first display 230 is viewed from above, thereby covering the edges of the first display 230 to be invisible from the outside. In an embodiment, the second protection frame 223a may be integrated with the second side surface member 223. In some embodiments, the first protection frame 213a and the second protection frame 223a may be omitted.

According to various embodiments, the hinge housing 310 (e.g., a hinge cover) may be disposed between the first housing 210 and the second housing 220, and may be arranged to cover at least a portion of the at least one hinge module. In an embodiment, the hinge housing 310 may be covered by a portion of the first housing 210 and the second housing 220 or exposed to the outside, depending on whether the electronic device 200 is in the unfolded state, the folded state, or the intermediate state. For example, when the electronic device 200 is in the unfolded state, at least a portion of the hinge housing 310 may be disposed to be covered by the first housing 210 and the second housing 220 to be substantially invisible from the outside. In an embodiment, when the electronic device 200 is in the folded state, at least a portion of the hinge housing 310 may be disposed between the first housing 210 and the second housing 220 to be visible from the outside. In an embodiment, when the electronic device is in the intermediate state in which the first housing 210 and the second housing 220 are folded with a certain angle, the hinge housing 310 may be disposed between the first housing 210 and the second housing 220 to be at least partially visible from the outside of the electronic device 200. For example, the area of the hinge housing 310 exposed to the outside may be smaller than that in the case where the electronic device is fully folded. In an embodiment, the hinge housing 310 may include a curved surface.

According to various embodiments, the electronic device 200 may include at least one of the following components: one or more displays 230 and 300, input devices 215, sound output devices 227 and 228, sensor modules 217a, 217b, and 226, camera modules 216a, 216b, and 225, key input devices 219, indicators (not illustrated), or connector ports 229, in which the components are disposed on or in the first housing 210 and/or the second housing 220. In some embodiments, the electronic device 200 may additionally include at least one other component. In some embodiments, at least one of the above-described components may be omitted.

According to various embodiments, the one or more displays 230 and 300 may include a first display 230 (e.g., a flexible display) disposed to be supported by the first surface 211 of the first housing 210 and the third surface 221 of the second housing 220, and a second display 300 disposed in the internal space of the second housing 220 to be at least partially visible from the outside through the fourth surface 222. In some embodiments, the second display 300 may be disposed in the internal space of the first housing 210 to be visible from the outside through the second surface 212. In an embodiment, the first display 230 may be mainly used when the electronic device 200 is in the unfolded state, and the second display 300 may be mainly used when the electronic device 200 is in the folded state. In an embodiment, when the electronic device 200 is in the intermediate state, the electronic device 200 may be controlled such that the first display 230 and/or the second display 300 can be used based on the folding angle between the first housing 210 and the second housing 220.

According to various embodiments, the first display 230 may be disposed in an accommodation space defined by the pair of housings 210 and 220. For example, the first display 200 may be disposed in the recess 201 defined by the pair of housings 210 and 220, and may be disposed to occupy substantially most of the front surface of the electronic device 200 in the unfolded state. In an embodiment, the first display 230 may include a flexible display, at least a portion of which is transformable into a flat shape or a curved shape. In an embodiment, the first display 230 may include a first area 230a corresponding to the first housing 210 and a second area 230b corresponding to the second housing 220. In an embodiment, the first display 230 may include a folding area 230c including a portion of the first area 230a and a portion of the second area 230b with reference to the folding axis F. According to an embodiment, at least a portion of the folding area 230c may include an area corresponding to the at least one hinge module. In an embodiment, the area division of the first display 230 is merely an exemplary division by the pair of housings 210 and 220 and the at least one hinge module, and the first display 230 may be displayed as a single seamless full screen substantially through the pair of housings 210 and 220 and the at least one hinge module. In an embodiment, the first area 230a and the second area 230b may have an overall symmetrical shape or a partially asymmetrical shape with respect to the folding area 230c and/or the folding axis F.

According to various embodiments, the electronic device 200 may include a first rear surface cover 240 disposed on the second surface 212 of the first housing 210 and a second rear surface cover 250 disposed on the fourth surface 222 of the second housing 220. In some embodiments, at least a portion of the first rear surface cover 240 may be formed integrally with the first side surface member 213. In some embodiments, at least a portion of the second rear surface cover 250 may be integrated with the second side surface member 223. In an embodiment, at least one of the first rear surface cover 240 and the second rear surface cover 250 may be made of a substantially transparent plate (e.g., a glass plate including various coating layers, or a polymer plate) or an opaque plate. In an embodiment, the first rear surface cover 240 may be made of, for example, coated or colored glass, ceramic, polymer, metal (e.g., aluminum, stainless steel (STS), or magnesium), or an opaque plate such as a combination of two or more of these materials. In an embodiment, the second rear surface cover 250 may be made of a substantially transparent plate of, for example, glass or polymer. Accordingly, the second display 300 may be disposed in the internal space of the second housing 220 to be visible from the outside through the second rear surface cover 250.

According to various embodiments, the input device 215 may include a microphone. In some embodiments, the input devices 215 may include a plurality of microphones disposed to detect the direction of sound. In an embodiment, the sound output devices 227 and 228 may include speakers. In an embodiment, the sound output devices 227 and 228 may include a call receiver 227 disposed through the fourth surface 222 of the second housing 220, and an external speaker 228 disposed through at least a portion of the second side surface member 223 of the second housing 220. In some embodiments, the input devices 215, the sound output devices 227 and 228, and the connector ports 229 may be disposed in the spaces of the first housing 210 and/or the second housing 220, and may be exposed to the external environment through one or more holes provided in the first housing 210 and/or the second housing 220. In some embodiments, the holes provided in the first housing 210 and/or the second housing 220 may be commonly used for the input device 215 and the sound output devices 227 and 228. In some embodiments, the sound output devices 227 and 228 may include a speaker that operates without holes provided in the first housing 210 and/or the second housing 220 (e.g., a piezo speaker).

According to various embodiments, the camera modules 216a, 216b, and 225 may include a first camera module 216a disposed on the first surface 211 of the first housing 210, a second camera module 216b disposed on the second surface 212 of the first housing 210, and/or a third camera module 225 disposed on the fourth surface 222 of the second housing 220. In an embodiment, the electronic device 200 may include a flash 218 located near the second camera module 216b. In an embodiment, the flash 218 may include, for example, a light-emitting diode or a xenon lamp. In an embodiment, the camera modules 216a, 216b, and 225 may each include one or more lenses, an image sensor, and/or an image signal processor. In some embodiments, at least one of the camera modules 216a, 216b, and 225 may include two or more lenses (e.g., wide-angle and telephoto lenses) and image sensors, and the camera modules may be disposed together on one surface of the first housing 210 and/or the second housing 220.

According to various embodiments, the sensor modules 217a, 217b, and 226 may generate electrical signals or data values corresponding to an internal operating state or an external environmental state of the electronic device 200. In an embodiment, the sensor modules 217a, 217b, and 226 may include a first sensor module 217a disposed on the first surface 211 of the first housing 210, a second sensor module 217b disposed on the second surface 212 of the first housing 210, and/or a third sensor module 226 disposed on the fourth surface 222 of the second housing 220. In some embodiments, the sensor modules 217a, 217b, and 226 may include at least one of a gesture sensor, a grip sensor, a color sensor, an infrared (IR) sensor, an illumination sensor, an ultrasonic sensor, an iris recognition sensor, or a distance detection sensor (e.g., a time-of-flight (TOF) sensor or a light detection and ranging (LiDAR) sensor).

According to various embodiments, the electronic device 200 may further include at least one of sensor modules (not illustrated) such as an air pressure sensor, a magnetic sensor, a biometric sensor, a temperature sensor, a humidity sensor, or a fingerprint recognition sensor. In some embodiments, the fingerprint recognition sensor may be disposed through at least one of the first side surface member 213 of the first housing 210 and/or the second side surface member 223 of the second housing 220.

According to various embodiments, the key input devices 219 may be disposed to be exposed to the outside through the first side surface member 213 of the first housing 210. In some embodiments, the key input devices 219 may be disposed to be exposed outside through the second side surface member 223 of the second housing 220. In some embodiments, the electronic device 200 may not include some or all of the above-mentioned key input devices 219, and a key input device 219, which is not included, may be implemented in another form, such as a soft key, on at least one display 230 or 300. As an embodiment, the key input devices 219 may be implemented by using a pressure sensor included in the at least one display 230 or 300.

According to various embodiments, the connector ports 229 may include a connector (e.g., a USB connector or an interface connector port module (IF module)) configured to transmit/receive power and/or data to and from an external electronic device. In some embodiments, the connector ports 229 may be configured to perform a function for transmitting/receiving an audio signal to and from the external electronic device, or may further include a separate connector port (e.g., an ear jack hole) configured to perform an audio signal transmitting/receiving function.

According to various embodiments, at least one camera module 216a or 225 among the camera modules 216a, 216b, and 225, at least one sensor module 217a or 226 among the sensor modules 217a, 217b, and 226, and/or an indicator may be disposed to be exposed through the at least one display 230 or 300. For example, the at least one camera modules 216a or 225, the at least one sensor module 217a or 226, and/or the indicator may be disposed in the internal space of the at least one housing 210 or 300 below the active area (display area) of the at least one display 230 or 300, and may be disposed to come into contact with the external environment through an opening perforated up to the cover member (e.g., a window layer) and/or the second rear surface cover 250 or a transparent area. In an embodiment, an area in which the at least one display 230 or 300 and the at least one camera module 216a or 225 face each other may be provided as a transmission area with a predetermined transmittance as a portion of a content display area. In an embodiment, the transmission area may have a transmittance ranging from about 5% to about 20%. The transmission area may include an area overlapping the effective area (e.g., a view angle area) of the at least one camera module 216a or 225 through which light imaged by an image sensor to generate an image passes. For example, the transmission area of the at least one display 230 or 300 may include an area having a lower pixel density than the periphery. For example, the transmission area may be provided in place of an opening. For example, the at least one camera module 216a or 225 may include an under-display camera (UDC) or an under-panel camera (UPC). As an embodiment, some camera modules 216a and 225 or sensor modules 217a and 226 may be arranged to perform the functions thereof without being visually exposed through a display. For example, the areas facing the camera modules 216a and 225 and/or the sensor modules 217a and 226 disposed under the displays 230 and 300 (e.g., a display panel) may have an under-display camera (UDC) structure, and may not require a perforated opening.

According to various embodiments, when the electronic device 200 is in the unfolded state (e.g., the state in FIGS. 2A and 2B), the first housing 210 and the second housing 220 form an angle of about 180 degrees therebetween, and the first area 230a, the second area 230b, and the folding area 230c of the first display 230 may be arranged to be oriented in the same direction (e.g., the z-axis direction) while substantially forming the same plane. As an embodiment, when the electronic device 200 is in the unfolded state, the first housing 210 may rotate by an angle of about 360 degrees with respect to the second housing 220 to be folded in the opposite direction such that the second surface 212 and the fourth surface 222 face each other (out-folding type).

According to various embodiment, when the electronic device 200 is in the folded state (e.g., the state in FIGS. 3A and 3B), the first surface 211 of the first housing 210 and the third surface 221 of the second housing 220 may be disposed to face each other. In this case, the first area 230a and the second area 230b of the first display 230 may form a narrow angle (e.g., in the range of 0 degrees to about 10 degrees) with respect to each other via the folding area 230c, and may be disposed to face each other. In an embodiment, at least a portion of the folding area 230c may be transformed into a curved shape with a predetermined curvature. In an embodiment, when the electronic device 200 is in the intermediate state, the first housing 210 and the second housing 220 may be disposed to form a certain angle therebetween. In this case, the first area 230a and the second area 230b of the first display 230 may form an angle that is greater than that in the folded state and smaller than that in the unfolded state, and the curvature of the folding area 230c may be smaller than that in the folded state and greater than that in the unfolded state. In some embodiments, the first housing 210 and the second housing 220 may form an angle that allows the first and second housings to stop at a predetermined folding angle between the folded state and the unfolded state via the at least one hinge module (free stop function). In some embodiments, the first housing 210 and the second housing 220 may be continuously operated while being pressed in the unfolding or folding direction with reference to a predetermined inflection angle via the at least one hinge module.

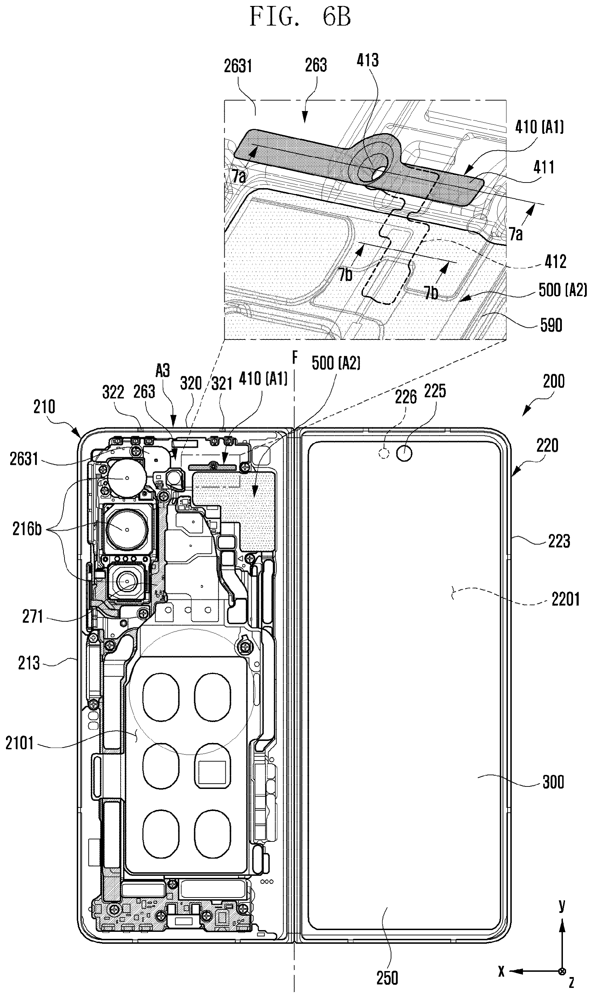

According to various embodiments, as illustrated in FIG. 2B, the electronic device 200 may include a first antenna structure 410 disposed in an internal space. In an embodiment, the first antenna structure 410 may be disposed in the first space 2101 of the first housing 210. In an embodiment, the first antenna structure 410 may be a laser direct structuring (LDS) pattern disposed on an outer surface of a dielectric structure made of a polymer material (e.g., the dielectric structure 263 of FIG. 6B). In an embodiment, the dielectric structure (e.g., the dielectric structure 263 of FIG. 6B) may include a portion of an antenna carrier disposed in the internal space of the electronic device 200, a bracket, a support member extended or coupled from the housing, or a rear case. In an embodiment, the first antenna structure 410 may be configured as a first antenna A1 to transmit or receive a wireless signal in a first frequency band through a wireless communication circuit (e.g., the wireless communication circuit 192 of FIG. 1). For example, the first frequency band may be a legacy band. In an embodiment, the first antenna A1 may be used in at least one of, for example, a low band of about 600 MHz to about 960 MHz, a mid band of about 1,700 MHz to about 2,200 MHz, a high band of about 2,300 MHz to about 2,800 MHz, a sub-6 band of about 5 GHz to 6 GHz, a UHB band of about 3.2GHz to about 4.5GHz, and bands for Bluetooth (BT), global positioning system (GPS), or wireless fidelity (WI-FI).

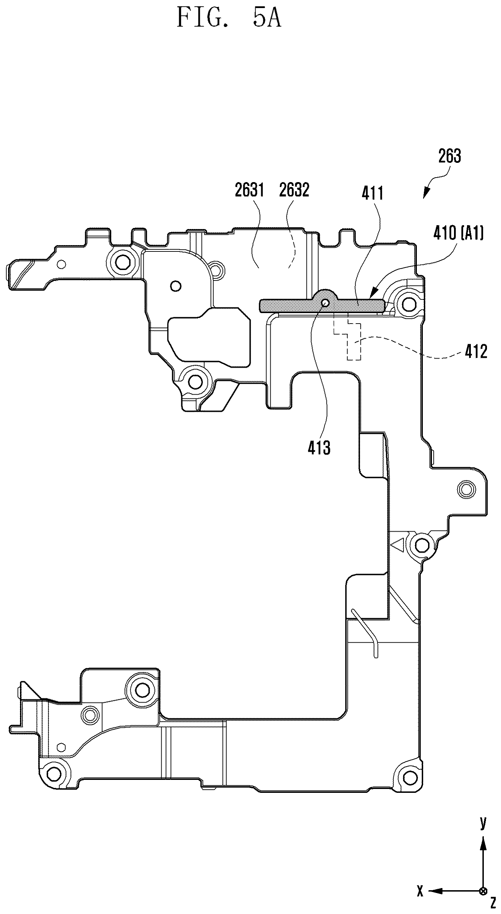

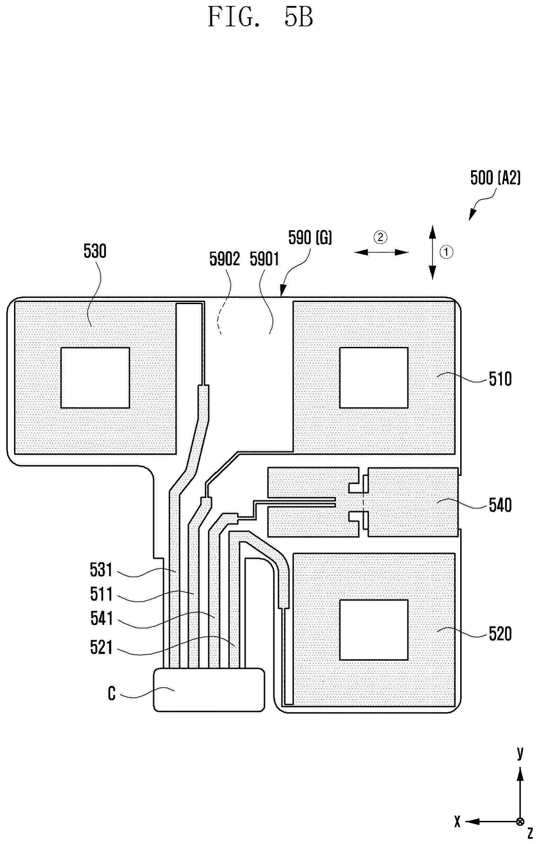

According to various embodiments, the electronic device 200 may include a second antenna structure 500 disposed at a predetermined interval from a first conductive pattern (e.g., the first conductive pattern 411 of FIG. 5A) of the first antenna structure 410 on the first surface (e.g., the first surface 2631 of FIG. 5A) of the dielectric structure (e.g., the dielectric structure 263 of FIG. 5A). In an embodiment, the second antenna structure 500 may be arranged to transmit or receive a wireless signal in a direction in which the first rear surface cover 240 is oriented (e.g., in the -z axis direction of FIG. 2B). For example, the second antenna structure 500 may be configured as a second antenna A2 to transmit or receive a wireless signal through a wireless communication circuit (e.g., the wireless communication module 192 of FIG. 1) in the direction in which the first rear surface cover 240 is oriented (e.g., in the -z axis direction of FIG. 2B). In an embodiment, the second antenna structure 500 may include a plurality of conductive patches (e.g., the conductive patches 510, 520, 530, and 540 of FIG. 5B) configured to operate in a second frequency band different from the first frequency band. For example, the second frequency band may include a frequency range of about 7.75 GHz to about 8.25 GHz (e.g., Ch 9). In an embodiment, the second frequency band may include a frequency band in the range of about 6.25 GHz to about 6.75 GHz (e.g., Ch 5).

In various embodiments, the electronic device 200 may include a conductive portion 320 disposed in at least a portion of the first side surface member 213 and used as a third antenna structure. In an embodiment, the conductive portion 320 may be segmented in the conductive first side surface member 213 by a first segmentation portion 321 (e.g., a first non-conductive portion) and a second segmentation portion 322 (e.g., a second non-conductive portion). In an embodiment, the conductive portion 320 may be configured as a third antenna A3 to transmit or receive a wireless signal in a third frequency band that is different from or identical to the first frequency band and/or the second frequency band through a wireless communication circuit (e.g., the wireless communication module 192 of FIG. 1). In an embodiment, the second antenna structure 500 may include a UWB (ultra wide band) antenna used to detect a distance to or a position of an external electronic device (e.g., using an AoA (angle of arrival) positioning technique) through a phase difference of the signals received using multiple conductive patches (e.g., the conductive patches 510, 520, 530, and 540 of FIG. 5B) and/or the conductive portion 320 used as the third antenna structure. For example, at least a portion of the second antenna structure 500 and the conductive portion 320 may be configured to operate in diversity, which may help improve reception sensitivity of the UWB antenna. In an embodiment, at least a portion of the first antenna structure 410 may be disposed between the second antenna structure 500 and the conductive portion when viewed from above the first rear surface cover 240.

According to an exemplary embodiment of the disclosure, the first antenna structure 410 may be disposed in a thickness direction of the electronic device 200 (e.g., in the z-axis direction) such that at least a portion of a second conductive pattern (e.g., the second conductive pattern 412 of FIG. 5B) disposed on a second surface (e.g., the second surface 2632 of FIG. 5B) of a dielectric structure (e.g., the dielectric structure 263 of FIG. 5B) overlaps a conductive layer (e.g., the conductive layer G of FIG. 5B) (e.g., a ground layer) of the second antenna structure 500. As a result, an arrangement space in a planar direction (e.g., in the x- and y-axis directions) of the electronic device 200 may be reduced, and interference with surrounding antenna structures (e.g., the second antenna structure 500 and/or the conductive portion 210) and/or conductors (e.g., the conductive first side surface member 213) may be minimized, thereby helping improve radiation performance.

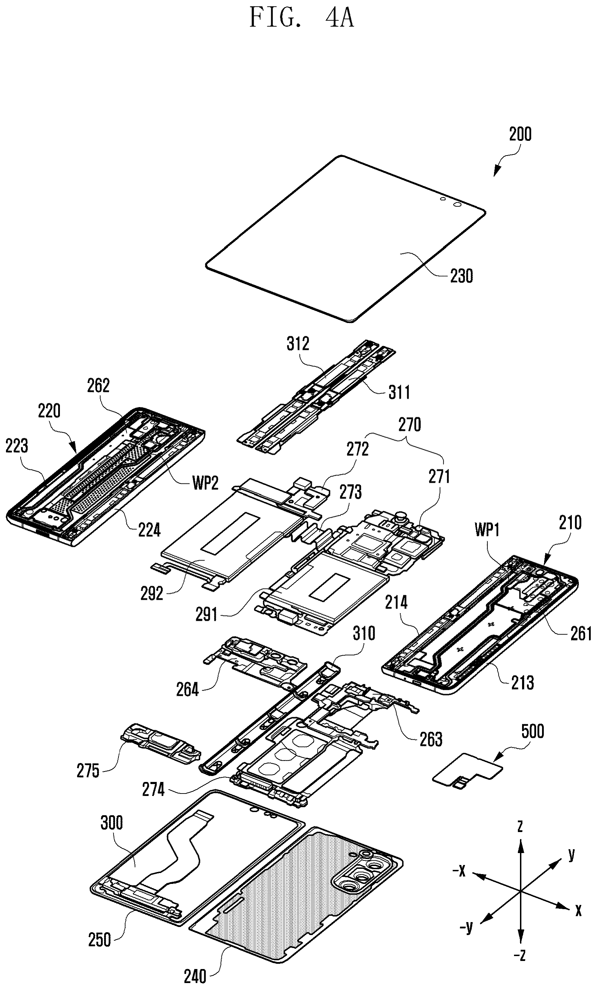

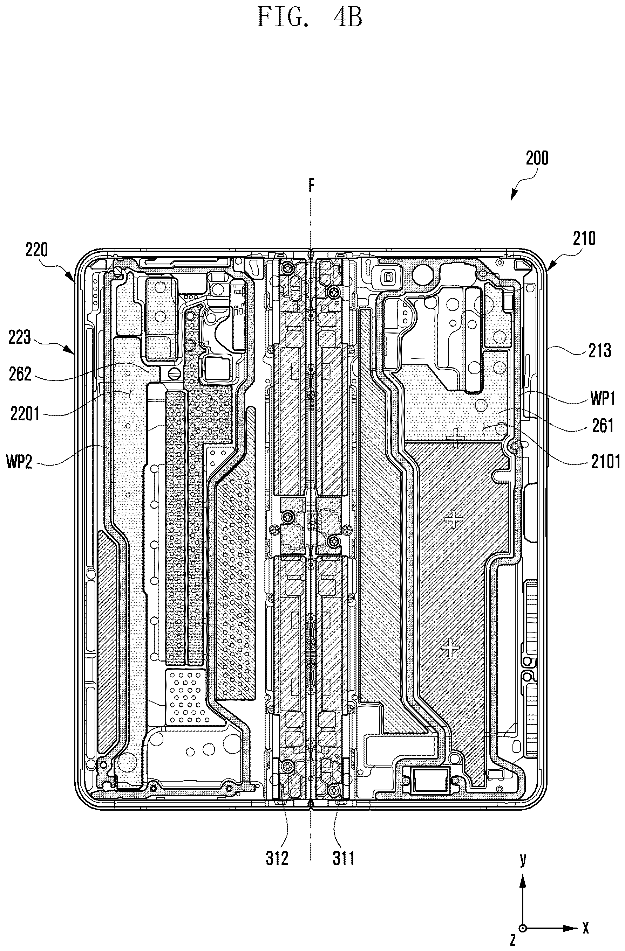

FIG. 4A is an exploded perspective view of the electronic device according to various embodiments of the disclosure. FIG. 4B is a view illustrating the configuration of the electronic device according to various embodiments of the disclosure.

FIG. 4B is a view illustrating an assembled state of the electronic device with a flexible display omitted.

Referring to FIGS. 4A and 4B, the electronic device 200 may include a first display 230 (e.g., a flexible display), a second display 300, a pair of support members 261 and 262, at least one substrate 270 (e.g., a printed circuit board (PCB)), a first housing 210, a second housing 220, a first rear surface cover 240, and/or a second rear surface cover 250.

According to various embodiments, the second display 300 may be disposed in a space (e.g., the second space 2201 of FIG. 4B) between the second housing 220 and the second rear surface cover 250. In an embodiment, the second display 300 may be disposed in the space between the second housing 220 and the second rear surface cover 250 to be visible from the outside through substantially the entire area of the second rear surface cover 250.

According to various embodiments, at least a portion of a first support member 261 may be foldably coupled to a second support member 262 via at least one hinge module (not illustrated). In an embodiment, the electronic device 200 may include at least one wiring member 273 (e.g., a flexible printed circuit board (FPCB)) disposed across the at least one hinge module from at least a portion of the first support member 261 to a portion of the second support member 262. In an embodiment, the first support member 261 may extend from the first side surface member 213 or may be disposed in a manner of being structurally coupled with the first side surface member 213. In an embodiment, the electronic device 200 may include a first space 2101 provided by the first support member 261 and the first rear surface cover 240. In an embodiment, the first housing 210 (e.g., the first housing structure) may be configured through the coupling of the first side surface member 213, the first support member 261, and the first rear surface cover 240. In an embodiment, the second support member 262 may extend from the second side surface member 223 or may be disposed in a manner of being structurally coupled with the second side surface member 223. In an embodiment, the electronic device 200 may include a second space 2201 provided by the second support member 262 and the second rear surface cover 250. In an embodiment, the second housing 220 (e.g., the second housing structure) may be configured through the coupling of the second side surface member 223, the second support member 262, and the second rear surface cover 250. In an embodiment, the at least one wiring member 273 and/or the at least one hinge module may be disposed to be at least partially supported by at least a portion of the pair of support members 261 and 262. In an embodiment, the at least one wiring member 273 may be disposed to extend from the first support member 261 to the second support member 262 across the folding axis (e.g., the folding axis F in FIG. 2A). In an embodiment, the at least one wiring member 273 may be disposed to have a length in a direction substantially perpendicular to the folding axis F (e.g., the x-axis direction).

According to various embodiments, the at least one board 270 may include a first substrate 271 disposed in the first space 2101 and a second substrate 272 disposed in the second space 2201. In an embodiment, the first substrate 271 and the second substrate 272 may include a plurality of electronic components disposed thereon to implement various functions of the electronic device 200. In an embodiment, the first substrate 271 and the second substrate 272 may be electrically connected to each other via the at least one wiring member 273.

According to various embodiments, the electronic device 200 may include one or more batteries 291 and 292. In an embodiment, the one or more batteries 291 and 292 may include a first battery 291 disposed in the first space 2101 of the first housing 210 and electrically connected to the first substrate 271, and a second battery 292 disposed in the second space 2201 of the second housing 220 and electrically connected to the second substrate 272. In an embodiment, the first support member 261 and the second support member 262 may further include one or more swelling holes for the first battery 291 and the second battery 292.

According to various embodiments, the first housing 210 may include a first rotation support surface 214, and the second housing 220 may include a second rotation support surface 224 corresponding to the first rotation support surface 214. In an embodiment, the first rotation support surface 214 and the second rotation support surface 224 may each include a curved surface corresponding to (naturally connected to) the curved outer surface of the hinge housing 310. In an embodiment, when the electronic device 200 is in the unfolded state, the first rotation support surface 214 and the second rotation support surface 224 may cover the hinge housing 310 to prevent the hinge housing 310 from being exposed to the rear surface of the electronic device 200 or to expose only a portion of the hinge housing 310 to the rear surface of the electronic device 200. In an embodiment, when the electronic device 200 is in the folded state, the first rotation support surface 214 and the second rotation support surface 224 may rotate along the curved outer surface of the hinge housing 310 to at least partially expose the hinge housing 310 to the rear surface of the electronic device 200.

According to various embodiments, the electronic device 200 may include at least one antenna (not illustrated) disposed in the first space 2201. In an embodiment, the at least one antenna may be disposed on the first battery 291 and the first rear surface cover 240 in the first space 2201. In an embodiment, the at least one antenna may include, for example, a near-field communication (NFC) antenna, a wireless charging antenna, and/or a magnetic secure transmission (MST) antenna. In an embodiment, the at least one antenna may execute, for example, short-range communication with an external device or wireless transmission/reception of power required for charging. In some embodiments, an antenna structure may be configured by at least a portion of the first side surface member 213 or the second side surface member 223 and/or a portion of the first support member 261 and the second support member 262, or a combination thereof.

According to various embodiments, the electronic device 200 may further include one or more electronic component assemblies 274 and 275 and/or additional support members 263 and 264 disposed in a first space (e.g., the first space 2101 of FIG. 1A) and/or a second space (e.g., the second space 2201 of FIG. 1A). For example, the one or more electronic component assemblies 274 and 275 may include an interface connector port assembly 274 or a speaker assembly 275. In an embodiment, the additional support member 263 disposed in the first space may include a dielectric structure, which is made of a polymer material and arranged to support a first antenna structure (e.g., the first antenna structure 410 of FIG. 2A) and a second antenna structure 500 according to an exemplary embodiment of the disclosure. In an embodiment, the second antenna structure 500 may be arranged between the first support member 261 and the first rear surface cover 240 to form a directional beam through the first rear surface cover 240.

According to various embodiments, the electronic device 200 may include a first waterproofing member WP1 disposed between the first display 230 and the first support member 261, and a second waterproofing member WP2 disposed between the first display 230 and the second support member 262. In an embodiment, the first waterproofing member WP1 may provide at least one first waterproofing space between a rear surface of the first display 230 and the first support member 261. In an embodiment, the at least one first waterproofing space may accommodate an area corresponding to at least one electronic component (e.g., a camera module or a sensor module) disposed to be supported by the first support member 261. In an embodiment, the second waterproofing member WP2 may provide a second waterproofing space between the rear surface of the first display 230 and the second support member 262. In an embodiment, the second waterproofing space may accommodate at least a portion of a bending portion folded to the rear surface of the first display 230. For example, the second waterproofing space may extend from the first display 230 and may be arranged to surround at least a portion of a bending portion (e.g., a chip on plastic (COP) structure) folded toward the rear surface. Accordingly, a control circuit (e.g., a display driver IC (DDI)) and/or a plurality of electronic elements disposed in the bending portion may be protected from external moisture and/or foreign substances by being disposed in the second waterproofing space.

According to various embodiments, the electronic device may include at least one hinge module and first and second hinge plates 311 and 312 connecting the first housing and the second housing. In an embodiment, the first hinge plate 311 and the second hinge plate 312 may form the same plane as at least a portion of the first housing 210 (e.g., the first support member 261) and at least a portion of the second housing 220 (e.g., the second support member 262) in the unfolded state.

FIG. 5A is a view illustrating the configuration of a dielectric structure including a first antenna structure according to various embodiments of the disclosure.

Referring to FIG. 5A, an electronic device (e.g., the electronic device 200 of FIG. 4A) may include a dielectric structure 263 (e.g., the additional support member 263 of FIG. 4A, a rear case, or a rear bracket) disposed in a first space (e.g., the first space 2101 of FIG. 4B) of a first housing (e.g., the first housing 210 of FIG. 4A). In an embodiment, the dielectric structure 263 may be formed of a polymer material (e.g., an injection-molded material) and may be disposed between a first rear surface cover (e.g., the first rear surface cover 240 of FIG. 4A) and a first substrate (e.g., the first substrate 271 of FIG. 4A) (e.g., a printed circuit board). In an embodiment, the dielectric structure 263 may include a first surface 2631 facing a first rear surface cover (e.g., the first rear surface cover 240 of FIG. 4A) (e.g., oriented in the -z-axis direction) and a second surface 2632 facing away from the first surface (e.g., oriented in the z-axis direction) and facing the first substrate (e.g., the first substrate 271 of FIG. 4A). In an embodiment, when viewed from above the first surface 2631, the dielectric structure 263 may be arranged to overlap at least a portion of the first substrate (e.g., the first substrate 271 of FIG. 4A). In an embodiment, the dielectric structure 263 may be fixed to a first support member (e.g., the first support member 261 of FIG. 4A) of the first housing (e.g., the first housing 210 of FIG. 4A) by a fastening member such as a screw. In some embodiments, the fastening member may penetrate both the dielectric structure 263 and the first substrate (e.g., the first substrate 271 of FIG. 4A) disposed below the dielectric structure 263, and may be fastened to the first support member (e.g., the first support member 261 of FIG. 4A), thereby being fixed.

According to various embodiments, the electronic device (e.g., the electronic device 200 of FIG. 4A) may include a first antenna structure 410 disposed on an outer surface of the dielectric structure 263. In an embodiment, the first antenna structure 410 may include an LDS pattern formed on the outer surface of the dielectric structure 263. In an embodiment, the first antenna structure 410 may include a first conductive pattern 411 disposed on a first surface 2631 of the dielectric structure 263, and a second conductive pattern 412 disposed such that at least a portion of the first conductive pattern 411 extends through a through hole 413 formed from the first surface 2631 to a second surface 2632 of the dielectric structure 263. In some embodiments, the first conductive pattern 411 and the second conductive pattern 412 may be separately disposed on the first surface 2631 and the second surface 2632, respectively, and may be electrically connected via a conductive via serving as an electrical connecting member filled in the through-hole 413 or coated on an inner surface of the through-hole 413. In an embodiment, the first conductive pattern 411 may be arranged such that, when viewed from above the first surface 2631, it does not overlap the second conductive pattern 412 except for the through-hole 413. In some embodiments, the first conductive pattern 411 may be arranged to at least partially overlap the first surface 2631 when viewed from above the first surface 2631. In some embodiments, the first conductive pattern 411 and the second conductive pattern 412 may be electrically connected via an electrical connection structure (e.g., a third conductive pattern) extending around a side surface of the dielectric structure 263. In some embodiments, the first antenna structure 410 may include a flexible printed circuit board (FPCB) on which a metal plate or conductive patterns 411 and 412 are formed and which is arranged to be attached to an outer surface of the dielectric structure 263. In some embodiments, at least one of the first conductive pattern 411 or the second conductive pattern 412 may be at least partially embedded in the dielectric structure 263 formed of a polymer material (e.g., an injection-molded material). In such a case, at least one of the first conductive pattern 411 or the second conductive pattern 412 may be disposed in the dielectric structure 263 through injection molding. In an embodiment, the first antenna structure 410 may operate as a first antenna A1 configured to transmit or receive a wireless signal in a first frequency band (e.g., a legacy band) through a wireless communication circuit (e.g., the wireless communication module 192 of FIG. 1).

FIG. 5B is a view illustrating the configuration of a second antenna structure according to various embodiments of the disclosure.

Referring to FIG. 5B, the second antenna structure 500 (e.g., an antenna module or an antenna) may include a dielectric substrate 590 (e.g., a substrate) formed by stacking a plurality of insulating layers, and may include a first substrate surface 5901 facing a first rear surface cover (e.g., the first rear surface cover 240 of FIG. 4A) (e.g., oriented in the -z-axis direction) and a second substrate surface 5902 facing away from the first substrate surface 5901 (e.g., oriented in the z-axis direction). In an embodiment, the dielectric substrate 590 may be a flexible substrate (e.g., a flexible printed circuit board (FPCB)). In an embodiment, the dielectric substrate 590 may be a rigid substrate (e.g., a printed circuit board (PCB)). In an embodiment, the second antenna structure 500 may include a conductive layer G (ground layer or ground plane) disposed on a first insulating layer among the plurality of insulating layers. For example, the conductive layer G may be a conductive pattern disposed on at least a portion of the second antenna structure 500. In some embodiments, the conductive layer G may include a ground pattern disposed on at least a portion of the second antenna structure 500. In an embodiment, the second antenna structure 500 may include a plurality of conductive patches 510, 520, 530, and 540 that are spaced apart from each other at predetermined intervals in a second insulating layer different from the first insulating layer among the plurality of insulating layers. In an embodiment, the plurality of conductive patches 510, 520, 530, and 540 may be disposed in a space between the conductive layer G and the first substrate surface 5901 or on the first substrate surface 5901. In an embodiment, the conductive layer G may be formed to have a size overlapping the plurality of conductive patches 510, 520, 530, and 540 when viewed from above the first substrate surface 5901, to form a field with the plurality of conductive patches 510, 520, 530, and 540. In an embodiment, the plurality of conductive patches 510, 520, 530, and 540 may operate as a second antenna A2 (e.g., a UWB antenna) configured to transmit or receive a wireless signal in a second frequency band (e.g., Ch5 (a frequency band of about 7.75 GHz to about 8.25 GHz) or Ch9 (a frequency band of about 6.25 GHz to about 6.75 GHz)) different from the first frequency band through a wireless communication circuit (e.g., the wireless communication module 192 of FIG. 1). In an embodiment, the second antenna A2 may include an array antenna operating in circular polarization (CP).

According to various embodiments, the plurality of conductive patches may include a first patch 510, a second patch 520, a third patch 530, and/or a fourth patch 540. In some embodiments, the fourth patch 540 may be omitted. In an embodiment, the first patch 510 may be electrically connected to a connector C via a first wire 511 (e.g., a first electrical path or a first wiring structure) disposed on the dielectric substrate 590. In an embodiment, the second patch 520 may be electrically connected to the connector C via a second wire 521 (e.g., a second electrical path or a second wiring structure) disposed on the dielectric substrate 590. In an embodiment, the third patch 530 may be electrically connected to the connector C via a third wire 531 (e.g., a third electrical path or a third wiring structure) disposed on the dielectric substrate 590. In an embodiment, the fourth patch 540 may be electrically connected to the connector C via a fourth wire 541 (e.g., a fourth electrical path or a fourth wiring structure) disposed on the dielectric substrate 590. In an embodiment, when the second antenna structure 500 is disposed in a first housing (e.g., the first housing 210 of FIG. 4A), the connector C may be connected to a first substrate (e.g., the first substrate 271 of FIG. 4A) disposed in the first housing (e.g., the first housing 210 of FIG. 4A), thereby being electrically connected to a wireless communication circuit (e.g., the wireless communication module 192 of FIG. 1) of the first substrate (e.g., the first substrate 271 of FIG. 4A).

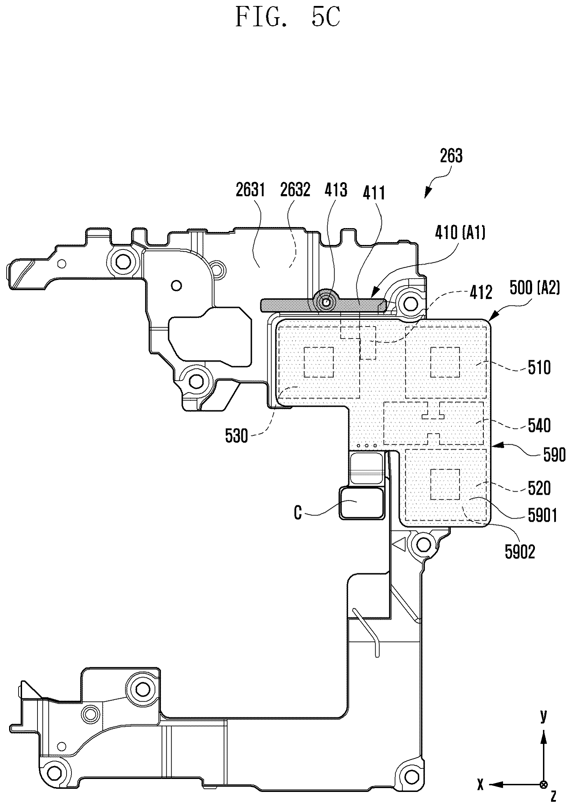

FIG. 5C is a view illustrating a state in which the second antenna structure is disposed on the dielectric structure according to various embodiments of the disclosure.

Referring to FIG. 5C, the second antenna structure 500 may be arranged to face at least a portion of the first surface 2631 of the dielectric structure 263. In an embodiment, the second antenna structure 500 may be arranged such that the second substrate surface 5902 of the dielectric substrate 590 faces the first surface 2631 of the dielectric structure 263. In some embodiments, the second antenna structure 500 may be arranged to be attached to at least a portion of the first surface 2631 of the dielectric structure 263. In such a case, the dielectric substrate 590 of the second antenna structure 500 may be attached to the first surface 2631 of the dielectric structure 263 through taping, bonding, or welding. In an embodiment, the second antenna structure 500 may be arranged to overlap at least a portion of the dielectric structure 263 when viewed from above the first surface 2631. In an embodiment, the dielectric substrate 590 of the second antenna structure 500 may be arranged side by side with the first conductive pattern 411 of the first antenna structure 410 so as to be spaced apart at a predetermined interval. In an embodiment, the dielectric substrate 590 of the second antenna structure 500 may be spaced apart from the first conductive pattern 411 of the first antenna structure 410 by about 3 mm to about 4 mm or less. In an embodiment, the dielectric substrate 590 of the second antenna structure 500 may be arranged to overlap at least a portion of a second conductive pattern 412 of the first antenna structure 410 disposed on a second surface 2632 of the dielectric structure 263 when viewed from above the first surface 2631. For example, at least a portion of the second conductive pattern 412 may be arranged to overlap the conductive layer G of the second antenna structure 500 when viewed from above the first surface 2631.

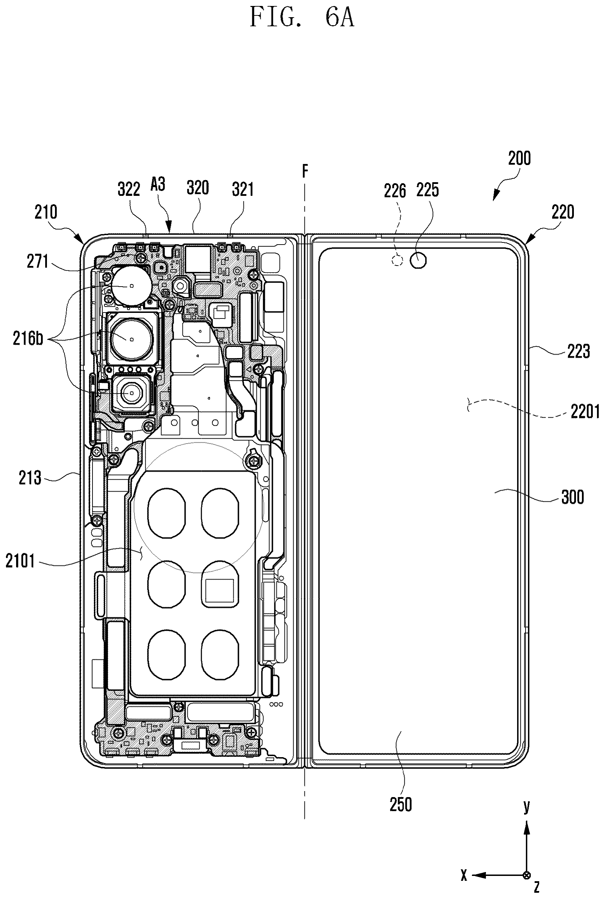

FIG. 6A is a rear view of an electronic device according to various embodiments of the disclosure, illustrating the configuration thereof. FIG. 6B is a view illustrating a state in which a dielectric structure and a second antenna structure according to various embodiments of the disclosure are arranged.

FIGS. 6A and 6B are rear views of the electronic device in an unfolded state, with a first rear surface cover omitted.

Referring to FIGS. 6A and 6B, the electronic device 200 may include a first substrate 271 (e.g., a printed circuit board) disposed in a first space 2101 of a first housing 210, a dielectric structure 263 (e.g., the additional support member 263 of FIG. 4A) including a first antenna structure 410 disposed in a stacked manner on at least a portion of the first substrate 271, and a second antenna structure 500 disposed in a stacked manner on at least a portion of the dielectric structure 263. In an embodiment, after the second antenna structure 500 is attached to the dielectric structure 263, the dielectric structure 263 may be fixed by being stacked on the first substrate 271. In an embodiment, the second antenna structure 500 may be disposed so as to form a beam pattern toward a first rear surface cover (e.g., the first rear surface cover 240 of FIG. 4A) through multiple conductive patterns (e.g., the conductive patterns 510, 520, 530, and 540 of FIG. 5B).

According to various embodiments, the electronic device 200 may include a conductive portion 320 disposed on at least a portion of a first side surface member 213 and used as a third antenna structure. In an embodiment, since the conductive portion 320 is disposed on a side surface of the electronic device 200, it may be exposed to be at least partially visible from the outside. In an embodiment, the conductive portion 320 may be segmented through a first segmentation portion 321 (e.g., a first non-conductive portion) and a second segmentation portion 322 (e.g., a second non-conductive portion) formed of a non-conductive material and spaced apart from the first side surface member 213. In an embodiment, the conductive portion 320 may operate as a third antenna A3 configured to transmit or receive wireless signals in the same or different frequency band(s) as the first antenna structure 410 operating as the first antenna A1 and/or the second antenna structure 500 operating as the second antenna A2, through a wireless communication circuit (e.g., the wireless communication module 192 of FIG. 1). In an embodiment, the first conductive pattern 411 of the first antenna structure 410 disposed on the first surface 2631 of the dielectric structure 263 may be arranged such that, when viewed from above the first surface 2631 of the dielectric structure 263, the first conductive pattern 411 is at least partially disposed at a predetermined distance between the second antenna structure 500 and the conductive portion 320. In an embodiment, the second conductive pattern 412 of the first antenna structure 410 disposed on the second surface 2632 of the dielectric structure 263 may be arranged such that, when viewed from above the first surface 2631 of the dielectric structure 263, the second conductive pattern 412 at least partially overlaps the conductive layer G of the second antenna structure 500.

According to various embodiments, the second antenna structure 500 and the conductive portion 320 used as the third antenna structure are required to be arranged to have a predetermined separation distance from each other so as to ensure isolation characteristics. For example, when the first antenna structure 410 is additionally disposed between the second antenna structure 500 and the conductive portion 320, isolation characteristics among the antennas A1, A2, and A3 may deteriorate. In particular, the first antenna structure 410 may lack sufficient space to ensure desired resonance characteristics, and to ensure such resonance characteristics, difficulties may arise in increasing the size of the electronic device 200 or redesigning surrounding structures.

The first antenna structure 410 according to exemplary embodiments of the disclosure may ensure desired resonance characteristics through conductive patterns (e.g., the first conductive pattern 411 and the second conductive pattern 412) divided and arranged on opposite outer surfaces (e.g., the first surface 2631 and the second surface 2632) of the dielectric structure 263, and may have an efficient arrangement structure. Therefore, the first antenna structure 410 may help ensure the performance of the antenna A1 while also contributing to slimming down the electronic device 200.

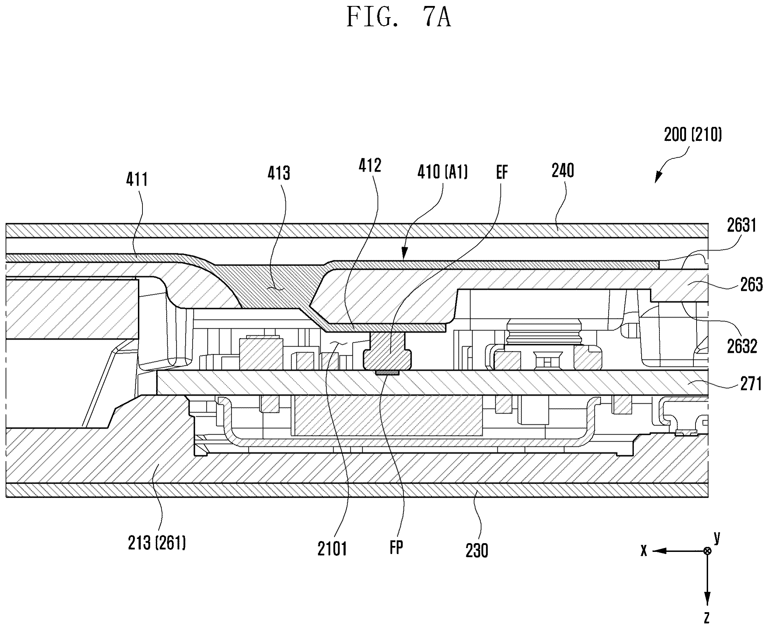

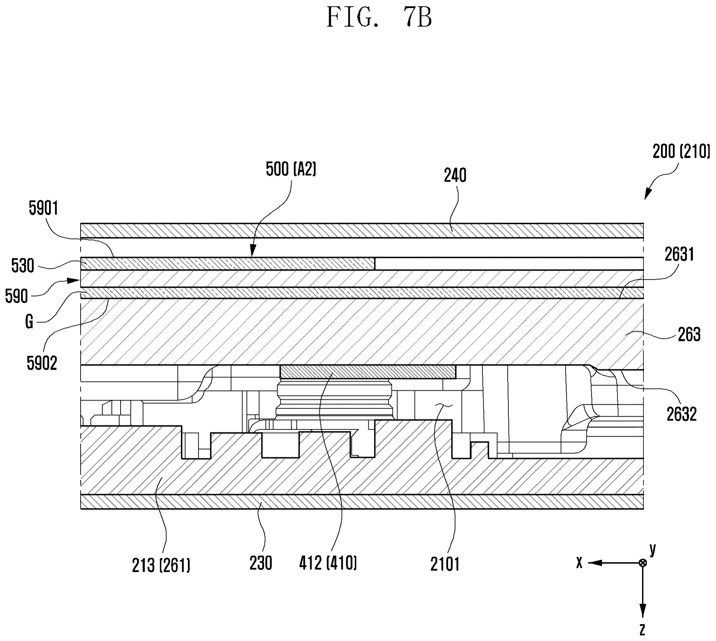

FIG. 7A is a partial cross-sectional view of the electronic device taken along line 7a-7a of FIG. 6B, according to various embodiments of the disclosure. FIG. 7B is a partial cross-sectional view of the electronic device taken along line 7b-7b of FIG. 6B, according to various embodiments of the disclosure.

Referring to FIGS. 7A and 7B, the electronic device 200 may include a flexible display 230 arranged to be supported by the first support member 261 extending from at least a portion of the first side surface member 213 to the first space 2101. According to an embodiment, the electronic device 200 may include a first rear surface cover 240 coupled to the first side surface member 213 in a direction opposite to the flexible display 230 (e.g., the -z-axis direction). In an embodiment, the first housing 210 may have a housing structure defining the first space 2101 through coupling between the first side surface member 213 and the first rear surface cover 240. In an embodiment, the electronic device 200 may include, in the first space 2101 of the first housing 210, a first substrate 271 (e.g., a printed circuit board) disposed between the first support member 261 and the first rear surface cover 240, a dielectric structure 263 disposed between the first substrate 271 and the first rear surface cover 240, a first antenna structure 410 provided on outer surfaces (e.g., the first surface 2631 and the second surface 2632) of the dielectric structure 263, and a second antenna structure 500 spaced apart from the first antenna structure 410 and disposed on an outer surface (e.g., the first surface 2631) of the dielectric structure 263. In an embodiment, the dielectric structure 263 may be arranged to be partially in contact with or in proximity to the first substrate 271.

According to various embodiments, the first antenna structure 410 may include a first conductive pattern 411 disposed on the first surface 2631 of the dielectric structure 263 and a second conductive pattern 412 disposed on the second surface 2632 of the dielectric structure 263. In an embodiment, the second conductive pattern 412 may be arranged such that the first conductive pattern 411 extends through a through-hole 413 formed to extend from the first surface 2631 to the second surface 2632 of the dielectric structure 263. In an embodiment, at least a portion of the second conductive pattern 412 may be arranged to overlap the conductive layer G of the second antenna structure 500 when viewed from above the first surface 2631, thereby inducing a portion of the second conductive pattern 412 to form a field for antenna operation through the conductive layer G.

According to various embodiments, the first substrate 271 (e.g., a printed circuit board) may include a feeding portion FP configured to be electrically connected to the second conductive pattern 412 disposed on the second surface 2632 of the dielectric structure 263. In an embodiment, the feeding portion FP may be electrically connected to a wireless communication circuit (e.g., a communication circuit or a communication module) (e.g., the wireless communication module 192 of FIG. 1) disposed on the first substrate 271. In an embodiment, the electronic device 200 may include an electrical connection member EF configured to electrically connect the second conductive pattern 412 and the feeding portion FP of the first substrate 271. In an embodiment, the electrical connection member EF may include a conductive contact (e.g., a C-clip) or a conductive tape. In an embodiment, the feeding portion FP may be arranged at a position not overlapping the conductive layer G of the second antenna structure 500 when viewed from above the first surface 2631. This may mean that an electrical connection portion of the second conductive pattern 412, which is electrically connected to the feeding portion FP via the electrical connection member EF, is also arranged not to overlap the conductive layer G. Such an arrangement structure may help reduce a degradation in the radiation performance of the first antenna A1 caused by interference between the feeding portion FP and the conductive layer G. In some embodiments, the feeding portion FP may be arranged at a position at least partially overlapping the conductive layer G when viewed from above the first surface 2631.

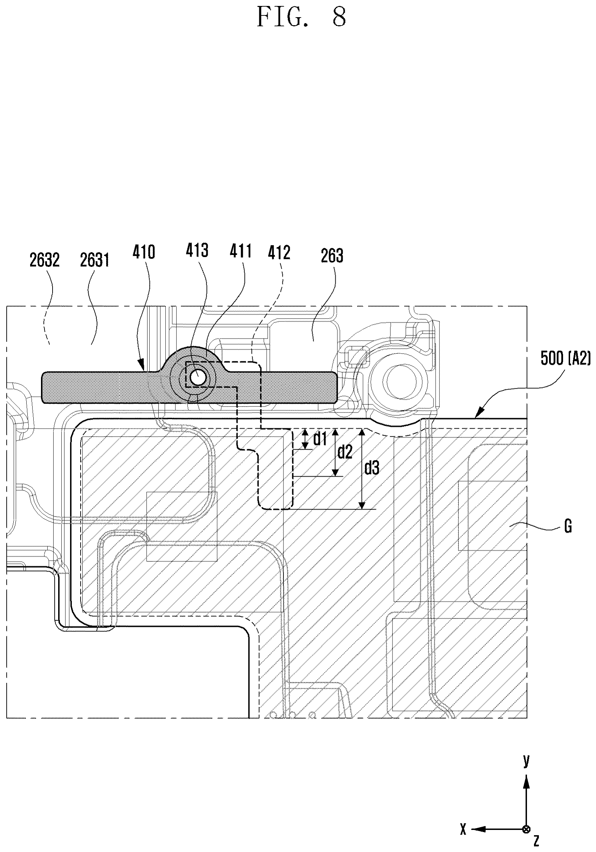

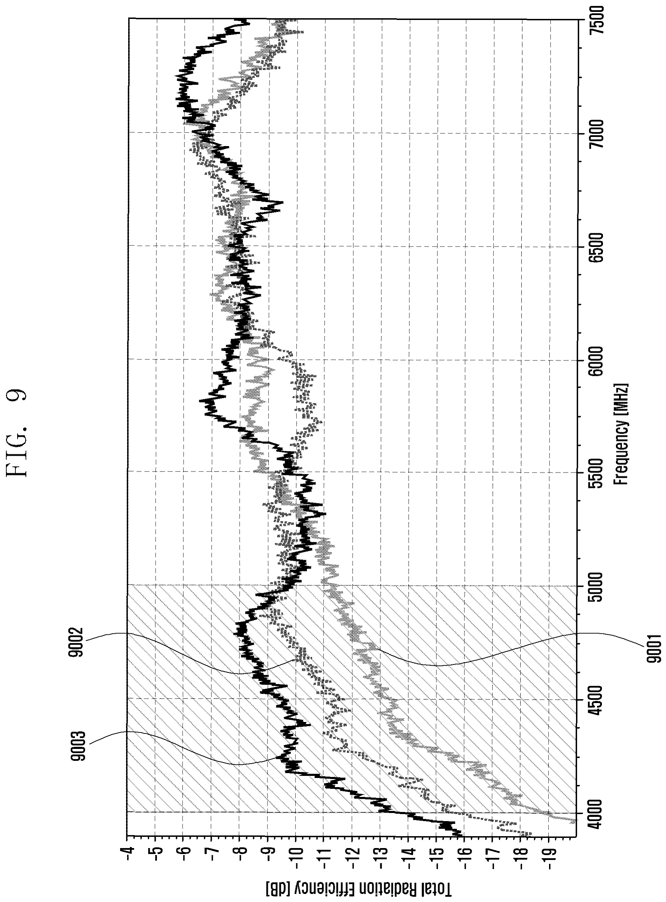

FIG. 8 is a view illustrating an arrangement relationship between a first antenna structure and a second antenna structure according to various embodiments of the disclosure. FIG. 9 is a graph comparing radiation performance of the first antenna structure according to an overlap amount of a second conductive pattern in FIG. 8 according to various embodiments of the disclosure.

Referring to FIGS. 8 and 9, a first antenna A1 operating through the first antenna structure 410 may have its radiation characteristics determined by an overlap amount and/or overlap length between the second conductive pattern 412 and a conductive layer G of the second antenna structure 500. For example, compared to a case where the second conductive pattern 412 and the conductive layer G overlap with a first overlap amount having a first overlap length d1 (e.g., graph 9001), the first antenna A1 may exhibit a relatively higher gain in a predetermined frequency band (e.g., about 4 GHz to about 5 GHz) when having a second overlap length d2 longer than the first overlap length d1 and having a second overlap amount larger than the first overlap amount (e.g., graph 9002). In an embodiment, compared to a case where the second conductive pattern 412 and the conductive layer G overlap with a second overlap amount having a second overlap length d2 (e.g., graph 9002), the first antenna A1 may exhibit a relatively higher gain in a predetermined frequency band (e.g., about 4 GHz to about 5 GHz) when having a third overlap length d3 longer than the second overlap length d2 and a third overlap amount larger than the second overlap amount (e.g., graph 9003). This may indicate that when the second conductive pattern 412 secures a sufficient overlap length and/or overlap amount with the conductive layer G of the second antenna structure 500, it may help improve the radiation performance of the first antenna A1.

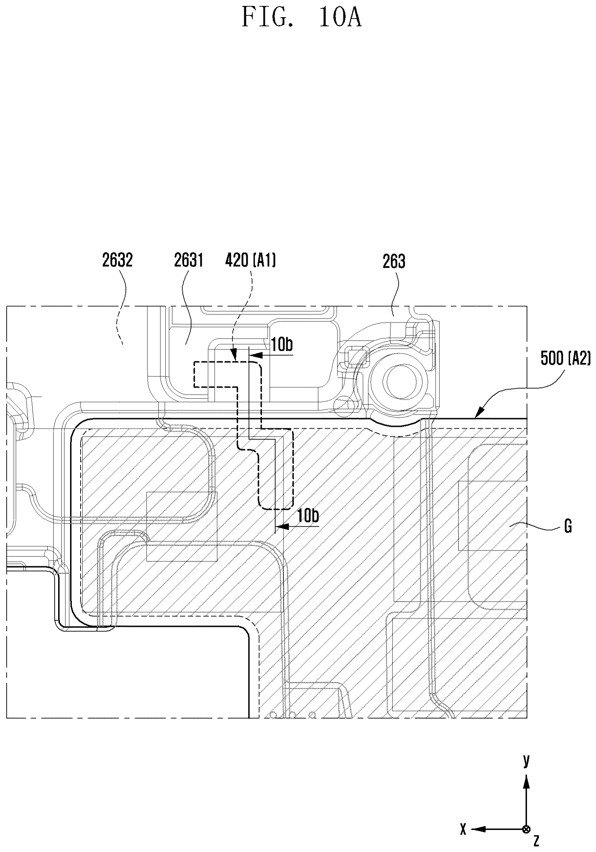

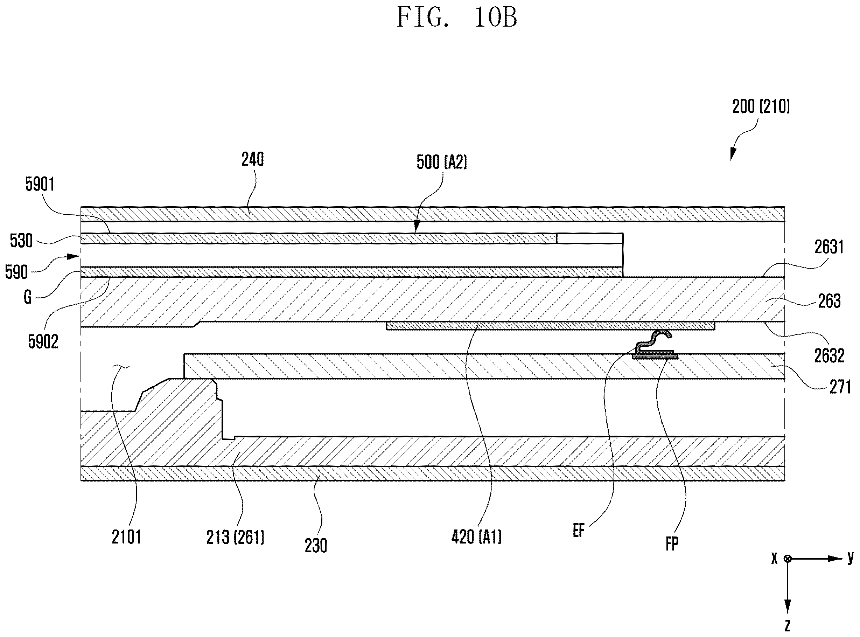

FIG. 10A is a view illustrating an arrangement relationship between a first antenna structure and a second antenna structure according to various embodiments of the disclosure. FIG. 10B is a partial cross-sectional view of an electronic device taken along line 10a-10a of FIG. 10A according to various embodiments of the disclosure.

In describing the electronic device 200 illustrated in FIGS. 10A and 10B, the same reference numerals are assigned to components that are substantially identical to those of the electronic device 200 illustrated in FIGS. 6B and 7A, and detailed descriptions thereof may be omitted.

Referring to FIGS. 10A and 10B, the electronic device 200 may include a first antenna structure 420 disposed on an outer surface of a dielectric structure 263. In an embodiment, the first antenna structure 420 may include a conductive pattern disposed on a second surface 2632 of the dielectric structure 263. In an embodiment, the first antenna structure 420 may include an LDS pattern disposed on the second surface 2632 of the dielectric structure 263. In an embodiment, at least a portion of the first antenna structure 420 may be arranged to overlap a conductive layer G of the second antenna structure 500 when viewed from above a first surface 2631. In an embodiment, at least a portion of the first antenna structure 420 may be electrically connected to a feeding portion FP of a first substrate 271 via an electrical connection member EF in an area not overlapping the conductive layer G when viewed from above the first surface 2631. In an embodiment, a portion of the first antenna structure 420 overlapping the conductive layer G may be induced to form a field for antenna operation through the conductive layer G.

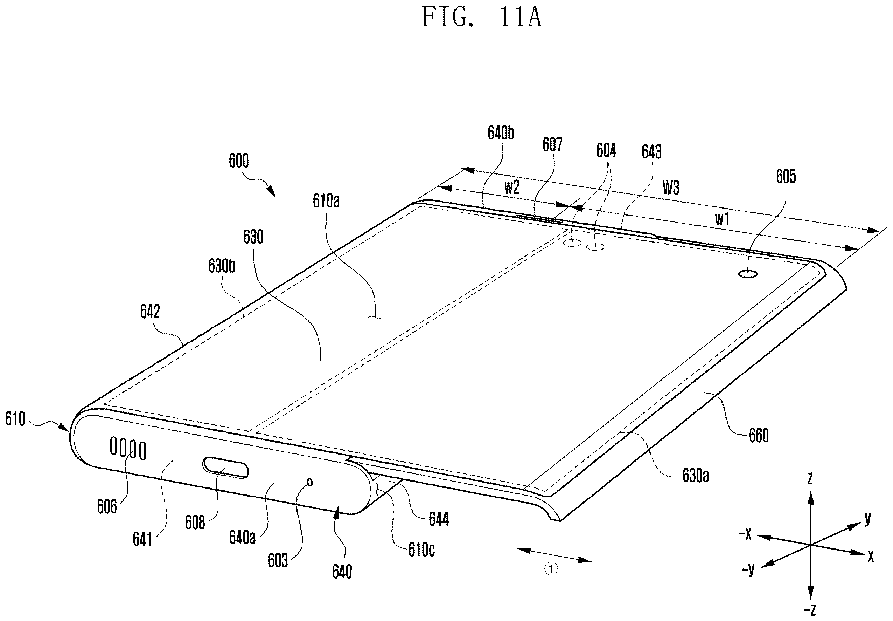

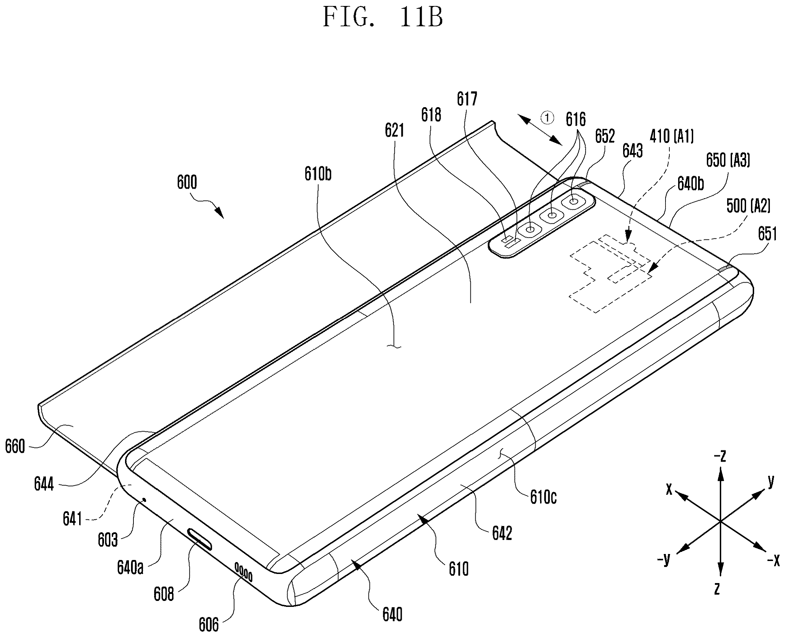

FIG. 11A is a front perspective view of an electronic device according to various embodiments of the disclosure. FIG. 11B is a rear perspective view of the electronic device according to various embodiments of the disclosure.

Referring to FIGS. 11A and 11B, the electronic device 600 may include a housing 610 (e.g., a first housing or base housing), and a slide structure 660 (e.g., a second housing or slide housing) coupled to be at least partially movable from the housing 610 and configured to support at least a portion of a flexible display 630. In an embodiment, the slide structure 660 may include a bendable member (not illustrated) (e.g., an articulated hinge or a multi-bar assembly) coupled to one end thereof and configured to support at least a portion of the flexible display 630. For example, when the slide structure 660 performs a sliding operation in the housing 610, the bendable member may be at least partially slid into the internal space of the housing 610 while supporting the flexible display 630. In an embodiment, the electronic device 600 may include a housing 610 (e.g., a housing structure) having a front surface 610a oriented in a first direction (e.g., the Z-axis direction), a rear surface 610b oriented in a second direction (e.g., the -Z-axis direction) opposite to the first direction, and a side surface member 640 surrounding the space between the front surface 610a and the rear surface 610b and including a side surface 610c at least partially exposed to the outside. In an embodiment, the rear surface 610b may be defined by a rear surface cover 621 coupled to the housing 610. In an embodiment, the rear surface cover 621 may be made of, for example, polymer, coated or colored glass, ceramic, metal (e.g., aluminum, stainless steel (STS), or magnesium), or a combination of two or more of these materials. In some embodiments, the rear surface cover 621 may be configured integrally with the housing 610. In an embodiment, at least a portion of the side surface 610c may be disposed to be exposed to the outside through the housing 610.

According to various embodiments, the side surface member 640 may include a first side surface 641 having a first length, a second side surface 642 extending from the first side surface 641 in a direction perpendicular to the first side surface 641 and having a second length larger than the first length, a third side surface 643 extending from the second side surface 642 in parallel to the first side surface 6411 and having the first length, and a fourth side surface 644 extending from the third side surface 643 in parallel to the second side surface 642 and having the second length. In an embodiment, the slide structure 660 supports the flexible display 630, and may be slid out from the second side surface 642 toward the fourth side surface 644 (e.g., in the X-axis direction) to increase the display area of the flexible display 630, or may be slid in from the fourth side surface 644 toward the second side surface 642 (e.g., in the -X-axis direction) to decrease the display area of the flexible display 630. In an embodiment, the electronic device 600 may include a first side surface cover 640a and a second side surface cover 640b to cover the first side surface 641 and the third side surface 643. In an embodiment, the first side surface 641 and the third side surface 643 may be disposed not to be exposed to the outside through the first side surface cover 640a and the second side surface cover 640b.

According to various embodiments, the electronic device 600 may include a flexible display 630 disposed to be supported by the slide structure 660. In an embodiment, the flexible display 630 may include a first portion 630a (e.g., a flat portion) supported by the slide structure 660, and a second portion 630b (e.g., a bending portion or a bendable portion) extending from the first portion 630a and at least partially supported by a bendable member. In an embodiment, when the electronic device 600 is in a slid-in state (e.g., the state in which at least a portion of the slide structure 660 is slid into the housing 610), the second portion 630b may be at least partially slid into the internal space of the housing 610 not to be exposed to the outside, and when the electronic device 600 is in a slid-out state (e.g., the state in which at least a portion of the slide structure 660 is slid out from the housing 610), the second portion 630b may be at least partially exposed to the outside to extend from the first portion 630a while being supported by at least a portion of the bendable member. Therefore, the electronic device 600 may include a rollable type electronic device or a slidable type electronic device in which the display area of the flexible display 630 is variable depending on the movement of the slide structure 660 from the housing 610.

According to various embodiments, the slide structure 660 may be movably coupled to be at least partially slid into or slid out from the housing 610. For example, the flexible display 630 may be configured to have a display area corresponding to a first width W1 from the second side surface 642 to the fourth side surface 644 in the slid-in state. In an embodiment, in the state in which the slide structure 660 is slid out, when at least a portion of the bendable member slid into the housing 610 moves to the outside of the electronic device to additionally have a second width W2, the flexible display 630 may be transformed to have a display area corresponding to a third width W3 larger than the first width W1. Accordingly, the display area of the flexible display 630 may be variable depending on the width of the electronic device that is variable in response to the sliding operation of the slide structure 660.

According to various embodiments, the electronic device 600 may include at least one of an input module 603, sound output modules 606 and 607, sensor modules 604 and 617, camera modules 605 and 616, a connector port 608, a key input module (not illustrated), or an indicator (not illustrated). As another embodiment, in the electronic device 600, at least one of the above-mentioned components may be omitted, or other components may be additionally included.

In various embodiments, the input module 603 may include a microphone. In some embodiments, the input module 603 may include a plurality of microphones arranged to detect the direction of sound. The sound output modules 606 and 607 may include speakers. The sound output modules 606 and 607 may include an external speaker 606 and a call receiver 607. As another embodiment, the sound output modules 606 and 607 may include a speaker that is operated without a separate speaker hole (e.g., a piezo speaker).

According to various embodiments, the sensor modules 604 and 617 may generate electrical signals or data values corresponding to an internal operating state or an external environmental state of the electronic device 600. The sensor modules 604 and 617 may include, for example, a first sensor module 604 (e.g., a proximity sensor or an illuminance sensor) disposed on the front surface 610a of the electronic device 600 and/or a second sensor module 617 (e.g., an HRM sensor) disposed on the rear surface 610b. In an embodiment, the first sensor module 604 may be disposed under the flexible display 630 in the front surface 610a of the electronic device 600. In an embodiment, the first sensor module 604 may further include at least one of a proximity sensor, an illuminance sensor, a time-of-flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiments, the camera modules 605 and 616 may include a first camera module 605 disposed on the front surface 610a of the electronic device 600 and a second camera module 616 disposed on the rear surface 610b. In an embodiment, the electronic device 600 may include a flash 618 located near the second camera module 616. In an embodiment, the camera modules 605 and 616 may include one or more lenses, an image sensor, and/or an image signal processor. In an embodiment, the first camera module 605 may be disposed under the flexible display 630 and may be configured to photograph a subject through a portion of an active area of the flexible display 630. In an embodiment, the flash 618 may include, for example, a light-emitting diode or a xenon lamp. In some embodiments, two or more lenses (e.g., a wide-angle lens and a telephoto lens) and image sensors may be disposed on one surface of the electronic device 600.

According to various embodiments, the electronic device 600 may include a first antenna structure 410 disposed in an internal space of the housing 610 to face the rear surface 610b (e.g., in the -z-axis direction) and configured to operate as a first antenna A1, and a second antenna structure 500 spaced apart from the first antenna structure 410 and configured to operate as a second antenna A2. In an embodiment, the electronic device 600 may include a conductive portion 650 disposed through two spaced segmentation portions 651 and 652 at least in a portion of the third side surface 643, the conductive portion 650 being used as a third antenna structure. In an embodiment, the conductive portion 650 may be configured to operate as a third antenna A3. In an embodiment, the first antenna structure 410 may be at least partially disposed between the second antenna structure 500 and the conductive portion 650 when viewed from above the rear surface cover 621. In an embodiment, the first antenna structure 410 and the second antenna structure 500 may have an arrangement structure substantially identical to that illustrated in FIGS. 6A to 7B for the first antenna structure 410 and the second antenna structure 500.

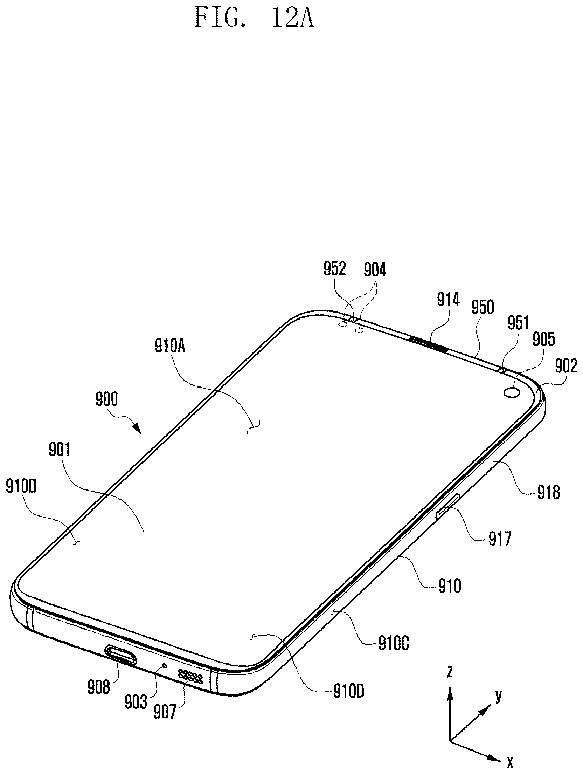

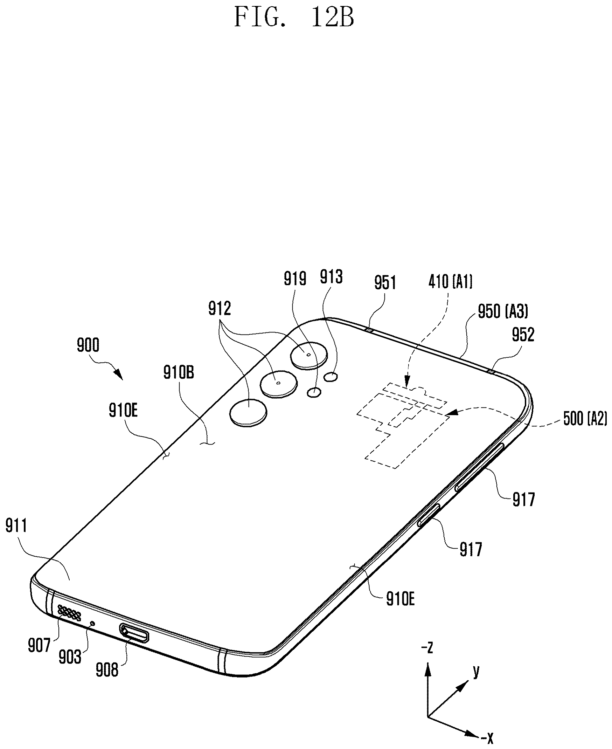

FIG. 12A is a front perspective view of an electronic device according to various embodiments of the disclosure. FIG. 12B is a rear perspective view of the electronic device according to various embodiments of the disclosure.

Referring to FIGS. 12A and 12B, the electronic device 900 may include a housing 910 including a first surface (or front surface) 910A, a second surface (or rear surface) 910B, and a side surface 910C surrounding a space between the first surface 910A and the second surface 910B. In another embodiment (not illustrated), the housing 910 may refer to a structure forming at least a portion of the first surface 910A, the second surface 910B, and the side surface 910C of FIG. 12A. In an embodiment, the first surface 910A may be formed by a front surface plate 902, at least a portion of which is substantially transparent (e.g., a glass plate or a polymer plate including various coating layers). The second surface 910B may be provided by a substantially opaque rear surface plate 911. The rear surface plate 911 may be made of, for example, coated or colored glass, ceramic, polymer, metal (e.g., aluminum, stainless steel (STS), or magnesium), or a combination of two or more of these materials. The side surface 910C may be defined by a side surface bezel structure (or a "side surface member") 918 coupled to the front surface plate 902 and the rear surface plate 911 and including metal and/or polymer. In some embodiments, the rear surface plate 911 and the side surface bezel structure 918 may be integrally configured and may include the same material (e.g., a metal material such as aluminum).

In the illustrated embodiment, the front surface plate 902 may include, at the opposite ends of long edges thereof, first areas 910D, which are bent from the first surface 910A toward the rear surface plate and extend seamlessly. In the illustrated embodiment (see FIG. 12B), the rear surface plate 911 may include, at the opposite long edges thereof, second areas 910E, which are bent from the second surface 910B toward the front surface plate 902 and extend seamlessly. In some embodiments, the front surface plate 902 or the rear surface plate 911 may include only one of the first areas 910D or the second areas 910E. In some embodiments, the front surface plate 902 may not include the first areas and the second areas, and may include only a flat surface arranged in parallel to the second surface 910B. In the above-described embodiments, when viewed from a side of the electronic device 900, the side surface bezel structure 918 may have a first thickness (or width) on the side surfaces where the first areas 910D or the second areas 910E are not included, and may have a second thickness smaller than the first thickness, on the side surfaces where the first areas 910D or the second areas 910E are included.

According to an embodiment, the electronic device 900 may include at least one of a display 901(e.g., a first display), an input device 903, sound output devices 907 and 914, sensor modules 904 and 919, camera modules 905, 912, and 913, a key input device 917, an indicator (not illustrated), and connectors 908 and 909. In some embodiments, at least one of the components (e.g., the key input devices 917 or the indicator) may be omitted from the electronic device 900 or other components may be additionally included.

The display 901 may be exposed through a substantial portion of, for example, the front surface plate 902. In some embodiments, the display 901 may be at least partially exposed through the front surface plate 902, which defines the first surface 910A and the first areas 910D of the side surface 910C. For example, the display 901 may be coupled to or arranged adjacent to a touch-sensing circuit, a pressure sensor that is capable of measuring touch intensity (pressure), and/or a digitizer that detects a magnetic field-type stylus pen. In some embodiments, at least some of the sensor modules 904 and 919 and/or at least some of the key input devices 917 may be disposed in the first areas 910D and/or the second areas 910E.

According to an embodiment, the input devices 903 may include a microphone. In some embodiments, the input device 903 may include a plurality of microphones arranged to detect the direction of sound. The sound output devices 907 and 914 may include speakers. The sound output devices 907 and 914 may include an external speaker 907 and a call receiver 914. In some embodiments, the input device 903, the sound output devices 907 and 914, and the connectors 908 and 909 may be disposed in the space in the electronic device 900, and may be exposed to the external environment through one or more holes provided in the housing 910. In some embodiments, the holes provided in the housing 910 may be commonly used for the input device 903 and the sound output devices 907 and 914. In some embodiments, the sound output devices 907 and 914 may include a speaker that operates without a hole in the housing 910 (e.g., a piezo speaker).

According to an embodiment, the sensor modules 904 and 919 may generate electrical signals or data values corresponding to an internal operating state or an external environmental state of the electronic device 900. The sensor modules 904 and 919 may include, for example, a first sensor module 904 (e.g., a proximity sensor), a second sensor module (not illustrated) (e.g., a fingerprint sensor) placed on the first surface 910A of the housing 910, and/or a third sensor module 919 (e.g., an HRM sensor) placed on the second surface 910B of the housing 910. The fingerprint sensor may be placed on the first surface 910A of the housing 910. The fingerprint sensor (e.g., an ultrasonic fingerprint sensor or an optical fingerprint sensor) may be disposed under the display 901 of the first surface 910A. The electronic device 900 may further include at least one of sensor modules (not illustrated), such as a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor 904.

According to an embodiment, the camera modules 905, 912, and 913 may include a first camera module 905 disposed on the first surface 910A of the electronic device 900, and/or a second camera module 912 and/or a flash 913 disposed on the second surface 910B. The camera modules 905 and 912 may include one or more lenses, an image sensor, and/or an image signal processor. The flash 913 may include, for example, a light-emitting diode or a xenon lamp. In some embodiments, two or more lenses (e.g., a wide-angle lens and a telephoto lens) and image sensors may be disposed on one surface of the electronic device 900.

According to an embodiment, the key input devices 917 may be arranged on the side surface 910C of the housing 910. In another embodiment, the electronic device 900 may not include some or all of the key input devices 917, and a key input device 917 not included may be implemented in another form, such as a soft key on the display 901. In another embodiment, the key input devices 917 may be implemented using pressure sensors included in the display 901.

The indicator may be disposed, for example, on the first surface 910A of the housing 910. The indicator may provide, for example, the state information of the electronic device 900 in an optical form. In another embodiment, the light-emitting element may provide, for example, a light source that operates in conjunction with the operation of the camera module 905. The indicator may include, for example, an LED, an IR LED, and/or a xenon lamp.

According to an embodiment, the connector holes 908 and 909 may include a first connector hole 908 capable of accommodating a connector (e.g., a USB connector or an interface connector port (IF) module) configured to transmit/receive power and/or data to/from an external electronic device, and a second connector hole (or an earphone jack) 909 capable of accommodating a connector configured to transmit/receive an audio signal to/from an external electronic device.

According to an embodiment, a camera module 905 from among the camera modules 905 and 912, a sensor module 904 from among the sensor modules 904 and 919, or an indicator may be disposed to be exposed through the display 901. For example, the camera module 905, the sensor module 904, or the indicator may be arranged in the internal space in the electronic device 900 to be in contact with the external environment through an opening perforated in the display 901 up to the front surface plate 902. As another embodiment, some sensor modules 904 may be disposed in the internal space of the electronic device to perform the functions thereof without being visually exposed through the front surface plate 902. For example, in this case, the area of the display 901 facing the sensor module may not require a perforated opening.

According to various embodiments, the electronic device 900 may include a first antenna structure 410 disposed in an internal space of the housing 910 to face the rear surface 911 (e.g., in the -z-axis direction) and configured to operate as a first antenna A1, and a second antenna structure 500 spaced apart from the first antenna structure 410 and configured to operate as a second antenna A2. In an embodiment, the electronic device 600 may include a conductive portion 950 disposed through two spaced segmentation portions 951 and 952 at least in a portion of the side surface 910C, the conductive portion 950 being used as a third antenna structure. In an embodiment, the conductive portion 950 may be configured to operate as a third antenna A3. In an embodiment, the first antenna structure 410 may be at least partially disposed between the second antenna structure 500 and the conductive portion 950 when viewed from above the rear surface cover 911. In an embodiment, the first antenna structure 410 and the second antenna structure 500 may have an arrangement structure substantially identical to that illustrated in FIGS. 6A to 7B for the first antenna structure 410 and the second antenna structure 500.

The arrangement structures of the antenna structures (e.g., the first antenna structure 410, the second antenna structure 500, and the conductive portion 320 of FIGS. 6A to 7B) according to exemplary embodiments of the disclosure may also be applied to other types of electronic devices, such as tablet PCs, notebook PCs, or other electronic devices having wireless communication functions.

According to various embodiments, an electronic device may include a housing (e.g., the first housing 210 of FIG. 4A), a dielectric structure (e.g., the dielectric structure 263 of FIG. 5C) disposed in an internal space (e.g., the first space 2101 of FIG. 4B) of the housing, the dielectric structure including a first surface (e.g., the first surface 2631 of FIG. 5C) and a second surface (e.g., the second surface 2632 of FIG. 5C) facing away from the first surface, a first antenna structure (e.g., the first antenna structure 410 of FIG. 5C) disposed on the dielectric structure, a second antenna structure (e.g., the second antenna structure 500 of FIG. 5C) disposed on the first surface and spaced apart from at least a portion of the first antenna structure, the second antenna structure including a conductive layer (e.g., the conductive layer G of FIG. 5B), and at least one wireless communication circuit (e.g., the wireless communication module 192 of FIG. 1) configured to transmit or receive a signal in at least one frequency band through the first antenna structure and/or the second antenna structure. The first antenna structure may include a first conductive pattern (e.g., the first conductive pattern 411 of FIG. 5C) disposed on the first surface and spaced apart from the second antenna structure, and a second conductive pattern (e.g., the second conductive pattern 412 of FIG. 5C) electrically connected to the first conductive pattern and disposed on the second surface such that, when viewed from above the first surface, at least a portion of the second conductive pattern overlaps the conductive layer.

According to various embodiments, the first antenna structure may be configured such that an operating frequency band thereof is determined based on an overlap area between the second conductive pattern and the conductive layer.

According to various embodiments, the electronic device may further include a printed circuit board (e.g., the first substrate 271 of FIG. 7A) disposed in the internal space at a position corresponding to the second surface of the dielectric structure and including the at least one wireless communication circuit. The printed circuit board may include a feeding portion (e.g., the feeding portion FP of FIG. 7A) electrically connected to the at least one wireless communication circuit, and at least a portion of the second conductive pattern is electrically connected to the at least one wireless communication circuit through the feeding portion.

According to various embodiments, the feeding portion may be disposed at a position not overlapping the conductive layer when viewed from above the first surface.

According to various embodiments, the feeding portion may be electrically connected to the second conductive pattern through an electrical connection member (e.g., the electrical connection member EF of FIG. 7A).

According to various embodiments, the electrical connection member may include at least one of a C-clip or a conductive tape.

According to various embodiments, the housing may include a conductive portion (e.g., the conductive portion 320 of FIG. 6B) forming at least a portion of a side surface of the electronic device, and the conductive portion may be configured to operate as a third antenna structure by being electrically connected to the at least one wireless communication circuit.

According to various embodiments, the first antenna structure may be at least partially disposed between the second antenna structure and the conductive portion when viewed from above the first surface.

According to various embodiments, the dielectric structure may be formed of a polymer material, the first antenna structure may include a laser direct structuring (LDS) pattern formed on the first surface and the second surface of the dielectric structure, and the at least one wireless communication circuit may be configured to operate in a first frequency band through the LDS pattern.

According to various embodiments, the second antenna structure may include a dielectric substrate (e.g., the dielectric substrate 590 of FIG. 7B) including a first substrate surface (e.g., the first substrate surface 5901 of FIG. 7B), a second substrate surface (e.g., the second substrate surface 5902 of FIG. 7B) positioned closer to the first surface than the first substrate surface, and a conductive layer disposed in a space between the first substrate surface and the second substrate surface, and a plurality of conductive patches (e.g., the conductive patches 510, 520, 530, and 540 of FIG. 5B) disposed between the conductive layer and the first substrate surface in the dielectric substrate. The at least one wireless communication circuit may be configured to operate in a second frequency band different from the first frequency band through the plurality of conductive patches.

According to various embodiments, the dielectric substrate may include a flexible printed circuit board (FPCB) attached to the first surface of the dielectric structure.

According to various embodiments, the housing may include a first housing (e.g., the first housing 210 of FIG. 4A) and a second housing (e.g., the second housing 220 of FIG. 4A) foldably coupled to the first housing through a hinge device, and may further include a flexible display (e.g., the flexible display 230 of FIG. 4A) arranged to be supported by at least a portion of the first housing and at least a portion of the second housing. The dielectric structure may be disposed in an internal space of the first housing.

According to various embodiments, the first housing may include a rear surface cover (e.g., the first rear surface cover 240 of FIG. 4A) disposed in a direction opposite to the flexible display, and the dielectric structure may be arranged such that the first surface faces the rear surface cover.

According to various embodiments, the housing (e.g., the housing 910 of FIG. 12A) may include a front surface cover (e.g., the front surface cover 902 of FIG. 12A), a rear surface cover (e.g., the rear surface cover 911 of FIG. 12B) facing away from the front surface cover, and a side surface member (e.g., the side surface member 918 of FIG. 12A) disposed to surround the internal space between the front surface cover and the rear surface cover. The dielectric structure may be disposed in the internal space such that the first surface faces the rear surface cover.

According to various embodiments, the electronic device may include a display (e.g., the display 901 of FIG. 12A), which is disposed in the internal space such that at least a portion thereof is visible from outside the electronic device through at least a portion of the front surface cover.

According to various embodiments, an electronic device may include a first housing (e.g., the first housing 210 of FIG. 4A), a second housing (e.g., the second housing 220 of FIG. 4A) foldably coupled to the first housing through a hinge device (e.g., the at least one hinge module of FIG. 4A), a dielectric structure (e.g., the dielectric structure 263 of FIG. 5C) disposed in an internal space (e.g., the first space 2101 of FIG. 4B) of the first housing and including a first surface (e.g., the first surface 2631 of FIG. 5C) and a second surface (e.g., the second surface 2632 of FIG. 5C) facing away from the first surface, a first antenna structure (e.g., the first antenna structure 410 of FIG. 5C) disposed on the dielectric structure, a second antenna structure (e.g., the second antenna structure 500 of FIG. 5C) disposed on the first surface and spaced apart from at least a portion of the first antenna structure and including a conductive layer (e.g., the conductive layer G of FIG. 5B), a third antenna structure including a conductive portion (e.g., the conductive portion 320 of FIG. 6B) disposed on a portion of a side surface of the first housing, and at least one wireless communication circuit (e.g., the wireless communication module 192 of FIG. 1) configured to transmit or receive a signal in at least one frequency band through the first antenna structure, the second antenna structure, and/or the third antenna structure. The first antenna structure may include a first conductive pattern (e.g., the first conductive pattern 411 of FIG. 5C) disposed on the first surface and spaced apart from the second antenna structure, and a second conductive pattern (e.g., the second conductive pattern 412 of FIG. 5C) electrically connected to the first conductive pattern and disposed on the second surface such that, when viewed from above the first surface, at least a portion of the second conductive pattern overlaps the conductive layer.

According to various embodiments, the first antenna structure may be at least partially disposed between the second antenna structure and the third antenna structure when viewed from above the first surface.

According to various embodiments, the electronic device may further include a flexible display (e.g., the flexible display 230 of FIG. 4A) arranged to be supported by at least a portion of the first housing and at least a portion of the second housing.

According to various embodiments, the first housing may include a rear surface cover (e.g., the rear surface cover 240 of FIG. 4A) disposed in a direction opposite to the flexible display, and the dielectric structure may be disposed in the internal space such that the first surface faces the rear surface cover.

According to various embodiments, the second antenna structure may include a dielectric substrate (e.g., the dielectric substrate 590 of FIG. 5C) including a first substrate surface (e.g., the first substrate surface 5901 of FIG. 5C), a second substrate surface (e.g., the second substrate surface 5902 of FIG. 5C) positioned closer to the first surface than the first substrate surface, and the conductive layer (e.g., the conductive layer G of FIG. 5B) disposed in a space between the first substrate surface and the second substrate surface, and a plurality of conductive patches (e.g., the conductive patches 510, 520, 530, and 540 of FIG. 5C) disposed on the dielectric substrate between the conductive layer and the first substrate surface. The at least one wireless communication circuit may be configured to transmit or receive the signal through the plurality of conductive patches.

The embodiments of the disclosure disclosed in this specification and drawings are provided merely to propose specific examples in order to easily describe the technical features according to the embodiments of the disclosure and to help understanding of the embodiments of the disclosure, and are not intended to limit the scope of the embodiments of the disclosure. Accordingly, the scope of various embodiments of the disclosure is to be construed as including all changes or modifications derived based on the technical idea of the various embodiments of the disclosure in addition to the embodiments disclosed herein.

## Claims

1. An electronic device comprising:
a housing (210);
a dielectric structure (263) disposed in the housing, the dielectric structure including a first surface (2631) and a second surface (2632) facing away from the first surface;
a first antenna structure (410) disposed on the dielectric structure;
a second antenna structure (500) disposed on the first surface and spaced apart from at least a portion of the first antenna structure, the second antenna structure including a conductive layer (G); and
at least one wireless communication circuit (192) configured to transmit or receive a signal through the first antenna structure and/or the second antenna structure,
wherein the first antenna structure comprises:
a first conductive pattern (411) disposed on the first surface and spaced apart from the second antenna structure; and
a second conductive pattern (412) electrically connected to the first conductive pattern and disposed on the second surface such that, when viewed from above the first surface, at least a portion of the second conductive pattern overlaps the conductive layer.

2. The electronic device of claim 1, wherein the first antenna structure is configured such that an operating frequency band thereof is determined based on an overlap area between the second conductive pattern and the conductive layer.

3. The electronic device of claim 1 or 2, further comprising:
a printed circuit board (271) disposed in an internal space at a position corresponding to the second surface of the dielectric structure and including the at least one wireless communication circuit,
wherein the printed circuit board comprises a feeding portion (FP) electrically connected to the at least one wireless communication circuit, and
wherein at least a portion of the second conductive pattern is electrically connected to the at least one wireless communication circuit through the feeding portion.

4. The electronic device of claim 3, wherein the feeding portion is disposed at a position not overlapping the conductive layer when viewed from above the first surface.

5. The electronic device of claim 3 or 4, wherein the feeding portion is electrically connected to the second conductive pattern through an electrical connection member (EF).

6. The electronic device of claim 5, wherein the electrical connection member comprises at least one of a C-clip or a conductive tape.

7. The electronic device of any one of claims 1 to 6, wherein the housing comprises a conductive portion (320) forming at least a portion of a side surface of the electronic device, and
wherein the conductive portion is configured to operate as a third antenna structure by being electrically connected to the at least one wireless communication circuit.

8. The electronic device of claim 7, wherein the first antenna structure is at least partially disposed between the second antenna structure and the conductive portion when viewed from above the first surface.

9. The electronic device of any one of claims 1 to 8, wherein the dielectric structure is formed of a polymer material,
wherein the first antenna structure comprises a laser direct structuring (LDS) pattern formed on the first surface and the second surface of the dielectric structure, and
wherein the at least one wireless communication circuit is configured to operate in a first frequency band through the LDS pattern.

10. The electronic device of any one of claims 1 to 9, wherein the second antenna structure comprises:
a dielectric substrate (590) comprising a first substrate surface (5901), a second substrate surface (5902) positioned closer to the first surface than the first substrate surface, and a conductive layer disposed in a space between the first substrate surface and the second substrate surface; and
a plurality of conductive patches (510, 520, 530, 540) disposed between the conductive layer and the first substrate surface in the dielectric substrate, and
wherein the at least one wireless communication circuit is configured to operate in a second frequency band different from the first frequency band through the plurality of conductive patches.

11. The electronic device of claim 10, wherein the dielectric substrate comprises a flexible printed circuit board (FPCB) attached to the first surface of the dielectric structure.

12. The electronic device of any one of claims 1 to 11, wherein the housing comprises:
a first housing (210);
a second housing (220) foldably coupled to the first housing through a hinge device (400, 400-1, 400-2); and
a flexible display (230) arranged to be supported by at least a portion of the first housing and at least a portion of the second housing, and
wherein the dielectric structure is disposed in an internal space of the first housing.

13. The electronic device of claim 12, wherein the first housing comprises a rear surface cover (240) disposed in a direction opposite to the flexible display, and
wherein the dielectric structure is arranged such that the first surface faces the rear surface cover.

14. The electronic device of any one of claims 1 to 11, wherein the housing (910) comprises:
a front surface cover (902);
a rear surface cover (911) facing away from the front surface cover; and
a side surface member (918) disposed to surround a space between the front surface cover and the rear surface cover, and
wherein the dielectric structure is disposed in the space such that the first surface faces the rear surface cover.

15. The electronic device of claim 14, further comprising:
a display (901) disposed in the space such that at least a portion thereof is visible from outside the electronic device through at least a portion of the front surface cover.
